(19) Europäisches Patentamt
European Patent Office
Office européen des brevets

(11) **EP 4 417 451 B1**

(12) **EUROPÄISCHE PATENTSCHRIFT**

(45) Veröffentlichungstag und Bekanntmachung des Hinweises auf die Patenterteilung:
**24.12.2025 Patentblatt 2025/52**

(21) Anmeldenummer: **24180479.8**

(22) Anmeldetag: **19.01.2022**

(51) Internationale Patentklassifikation (IPC):
**B60K 6/52** (2007.10) **B60K 6/48** (2007.10)
**B60K 17/344** (2006.01) **B60K 6/387** (2007.10)
**B60K 6/365** (2007.10) **B60K 23/08** (2006.01)
**B60K 6/442** (2007.10)

(52) Gemeinsame Patentklassifikation (CPC):
**B60K 6/52; B60K 6/365; B60K 6/387; B60K 6/48;**
B60K 6/442; B60K 23/08; B60K 2006/4808;
B60Y 2200/221; B60Y 2200/92

(54) **LEISTUNGSVERZWEIGTER ACHSANTRIEB UND LANDWIRTSCHAFTLICHES FAHRZEUG**

POWER-SPLIT AXLE DRIVE AND AGRICULTURAL VEHICLE

ENTRAÎNEMENT D'ESSIEU À RÉPARTITION DE PUISSANCE ET VÉHICULE AGRICOLE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**21.08.2024 Patentblatt 2024/34**

(62) Dokumentnummer(n) der früheren Anmeldung(en) nach Art. 76 EPÜ:
**22152192.5 / 4 215 392**

(73) Patentinhaber: **Deere & Company**
**Moline, IL 61265 (US)**

(72) Erfinder:
• **Gugel, Rainer**
**Mannheim (DE)**

• **Mueller, David**
**Mannheim (DE)**
• **Letscher, Jens**
**Mannheim (DE)**

(74) Vertreter: **Stein, Stefan**
**John Deere GmbH & Co. KG**
**Global Intellectual Property Services**
**John-Deere-Straße 70**
**68163 Mannheim (DE)**

(56) Entgegenhaltungen:
EP-A1- 3 925 809          DE-A1- 102014 009 866
DE-A1- 102017 218 858          JP-A- 2007 045 177
US-A1- 2012 077 633

**Beschreibung**

Die Erfindung betrifft einen leistungsverzweigten Achsantrieb gemäss dem Oberbegriff des unabhängigen Anspruchs 1 und ein landwirtschaftliches Fahrzeug gemäss Anspruch 10.

Die DE 10 2007 021 732 A1 offenbart einen leistungsverzweigten Achsantrieb für Fahrzeuge mit mindestens zwei antreibbaren Fahrzeugachsen, insbesondere für Nutzfahrzeuge und landwirtschaftliche Fahrzeuge. Der leistungsverzweigten Achsantrieb weist ein stufenlos verstellbares Getriebe ohne Zwischenachsdifferenzial mit mindestens einem ersten und einem zweiten Motor auf. Der erste Motor ist dabei mit einer ersten Fahrzeugachse verbunden und der zweite Motor ist mit einer zweiten Fahrzeugachse verbunden. Weiter weist der leistungsverzweigten Achsantrieb eine Kupplung auf. Durch die Kupplung ist eine Verbindung zwischen der ersten und der zweiten Fahrzeugachse herstellbar. Die Drehmomentübertragungsfähigkeit der Kupplung ist in Abhängigkeit von einem Antriebszustand des Fahrzeugs einstellbar. Aus der EP 3 626 502 A1 ist ein landwirtschaftliches Fahrzeug mit einem leistungsverzweigten Achsantrieb bekannt. Der leistungsverzweigte Achsantrieb umfasst einen Teilantriebsstrang mit einem Zusatzantriebselement, einen Elektromotor. Der Elektromotor ist durch eine ansteuerbare Drehmomentübertragungsvorrichtung mit dem leistungsverzweigten Achsantrieb wahlweise trieblich verbindbar. Die DE 10 2013 224 383 A1 offenbart einen leistungsverzweigte Achsantrieb mit einem Leistungsverzweigungsgetriebe und einem Zusatzantriebselement. Sowohl die EP 3 626 502 A1, als auch die DE 10 2013 224 383 A1 offenbaren, dass das Zusatzantriebselement auf das Leistungsverzweigungsgetriebe derart einwirkt, dass dadurch ein Vorlauf einer Fahrzeugachse regelbar ist. Die DE 10 2017 218 858 A1 offenbart ein Fahrzeug mit einem Leistungsverzweigungsgetriebe, bei welchem über eine Zwischenachse ein Drehmoment von einem E-Motor in das Leistungsverzweigungsgetriebe übertragen wird. Die Dokumente DE 10 2014 009 866 A1, US 2012/077633 A, JP 2007 045177 A und EP 3 925 809 A1 offenbaren Leistungsverzweigungskonzepte für einen Vorderachsantrieb.

Die bekannten leistungsverzweigten Achsantriebe weisen nachteilhafterweise einen konstruktiv aufwändigen und/oder für landwirtschaftliche Fahrzeuge unzureichenden Aufbau auf. Beispielsweise ist von Nachteil die Drehzahl und/oder Kraft und/oder das Drehmoment des Zusatzantriebs, insbesondere der dafür verwendeten Elektromotoren, zu hoch und somit das in den leistungsverzweigten Achsantrieb übertragene Drehzahl und/oder Drehmoment zu klein. Ebenso ist mit den bekannten leistungsverzweigten Achsantrieben nachteilhafterweise ein effizientes Bremsen nicht realisierbar.

Der vorliegenden Erfindung liegt daher die Aufgabe zugrunde einen leistungsverzweigten Achsantrieb und ein landwirtschaftliches Fahrzeug sowie ein Verfahren vorzuschlagen, durch welche die vorgenannten Probleme überwunden werden. Insbesondere sollen ein leistungsverzweigter Achsantrieb und ein landwirtschaftliches Fahrzeug vorgeschlagen werden, die konstruktiv einfacher und/oder weniger aufwändig ausgestaltet sind und/oder eine effiziente Übertragung der Drehzahl und/oder des Drehmoments vom Zusatzantrieb an das Leistungsverzweigungsgetriebe ermöglichen und/oder einen effizienteren Betrieb ermöglichen und/oder die Leistung und/oder die Fahrtüchtigkeit und/oder Fahreigenschaften des Nutzfahrzeugs bzw. des leistungsverzweigten Achsantriebs verbessert sind.

Diese Aufgabe wird durch einen leistungsverzweigten Achsantrieb mit den Merkmalen des Anspruchs 1 und ein landwirtschaftliches Fahrzeug mit den Merkmalen des Anspruchs 10 gelöst. Die abhängigen Ansprüche beziehen sich auf besonders vorteilhafte Ausführungsformen der Erfindung.

Erfindungsgemäß wird ein leistungsverzweigter Achsantrieb, insbesondere Antriebsstrang, für ein landwirtschaftliches Fahrzeug vorgeschlagen. Der leistungsverzweigte Achsantrieb umfasst ein erstes Zusatzantriebselement und eine erste Fahrzeugachse und eine zweite Fahrzeugachse und ein Hauptantriebselement zur Bereitstellung eines Drehmoments, und/oder insbesondere einer Drehbewegung und/oder einer Kraft. Das Drehmoment, und/oder insbesondere die Drehbewegung und/oder die Kraft, ist mit einer ersten Welle auf ein Hauptgetriebe übertragbar und/oder in das Hauptgetriebe einleitbar. Das Hauptgetriebe ist also über die oder mit der ersten Welle mit dem Hauptantriebselement verbunden, insbesondere antreibbar verbunden. Die zweiten Fahrzeugachse ist mit dem Hauptgetriebe verbunden, insbesondere antreibbar verbunden. Wenigstens die zweite Fahrzeugachse ist mit dem Drehmoment, und/oder insbesondere der Drehbewegung und/oder der Kraft, des Hauptantriebselements mit dem oder über das Hauptgetriebe antreibbar. Im Speziellen ist die zweiten Fahrzeugachse über eine oder mit einer dritten Welle mit dem Hauptgetriebe verbunden, insbesondere antreibbar verbunden. Mit anderen Worten, durch das Hauptantriebselement ist also ein Drehmoment, und/oder insbesondere eine Drehbewegung und/oder eine Kraft erzeugbar, welches mit der ersten oder über die erste Welle in das Hauptgetriebe und vom Hauptgetriebe mit der dritten oder über die dritte Welle in die oder an die zweite Fahrzeugachse einleitbar oder übertragbar ist. Der leistungsverzweigte Achsantrieb weist weiter ein Leistungsverzweigungsgetriebe auf. Das Leistungsverzweigungsgetriebe ist über einen oder mit einem ersten Radsatz mit dem Hauptgetriebe und der zweiten Fahrzeugachse verbunden, insbesondere antreibbar verbunden. Dadurch kann eine Drehbewegung und/oder eine Kraft und/oder ein Drehmoment vom Hauptantriebselement an das Hauptgetriebe und vom Hauptgetriebe mit dem oder über den ersten Radsatz an oder in das Leistungsverzweigungsgetriebe und/oder umgekehrt übertragen oder eingeleitet werden. Ebenso kann eine Drehbewegung und/oder eine Kraft und/oder ein Drehmoment von der zweiten Fahrzeugachse mit dem oder über den ersten Radsatz an oder in das Leistungsverzweigungsgetriebe und/oder umgekehrt übertragen oder eingeleitet werden. Ausserdem ist die erste Fahrzeugachse über eine oder mit einer zweiten Welle mit dem Leistungsverzweigungsgetriebe verbunden, insbesondere antreibbar verbunden. Somit ist ein Drehmoment, und/oder insbesondere eine Drehbewegung und/oder eine Kraft, des Leistungsverzweigungsgetriebes über die zweite Welle an oder in die erste Fahrzeugachse und/oder umgekehrt übertragbar oder einleitbar. Das erste Zusatzantriebselement ist, insbesondere zur Einleitung einer Drehbewegung und/oder einer Kraft und/oder eines Drehmoments, über ein erstes oder mit einem ersten Schaltelement mit dem Leistungsverzweigungsgetriebe verbindbar, bevorzugt lösbar verbindbar, besonders bevorzugt lösbar drehfest und/oder lösbar antreibbar verbindbar.

Im Speziellen kann das Leistungsverzweigungsgetriebe über den oder mit dem ersten Radsatz mit der dritten Welle verbunden, insbesondere antreibbar verbunden sein. Also kann eine Drehbewegung und/oder eine Kraft und/oder ein Drehmoment vom Hauptantriebselement an das Hauptgetriebe und vom Hauptgetriebe an die dritte Welle und mit dem oder über den ersten Radsatz von der dritten Welle an oder in das Leistungsverzweigungsgetriebe übertragen oder eingeleitet werden. Ebenso kann eine Drehbewegung und/oder eine Kraft und/oder ein Drehmoment von der zweiten Fahrzeugachse an die dritte Welle und mit dem oder über den ersten Radsatz von der dritten Welle an oder in das Leistungsverzweigungsgetriebe übertragen oder eingeleitet werden. Der erste Radsatz kann auch ein erstes Zahnradpaar, insbesondere ein erstes und ein zweites Festrad umfassen. Das erste Festrad kann mit der dritten Welle und das zweite Festrad mit dem Leistungsverzweigungsgetriebe verbunden, bevorzugt drehfest verbunden sein. Das erste Festrad kann mit dem zweiten Festrad kämmen, sich also insbesondere in ständigem Kämmeingriff mit diesem befinden. Dadurch kann eine Drehbewegung und/oder eine Kraft und/oder ein Drehmoment zwischen der dritten Welle und dem Leistungsverzweigungsgetriebe mit dem oder über das erste und zweite Festrad und/oder umgekehrt übertragen oder eingeleitet werden.

Der leistungsverzweigte Achsantrieb kann ein erstes Differential, insbesondere ein Vorderachsdifferential, umfassen. Das erste Differential kann über die zweite oder mit der zweiten Welle mit dem Leistungsverzweigungsgetriebe verbunden sein, insbesondere antreibbar verbunden sein. Dadurch kann eine Drehbewegung und/oder eine Kraft und/oder ein Drehmoment des Leistungsverzweigungsgetriebes mit dem ersten oder über das erste Differential in oder an die erste Fahrzeugachse und/oder umgekehrt einleitbar oder übertragbar sein. Der leistungsverzweigte Achsantrieb kann auch ein zweites Differential, insbesondere ein Hinterachsdifferential, umfassen. Das zweite Differential kann über die dritte oder mit der dritten Welle mit dem Hauptgetriebe verbunden sein, insbesondere antreibbar verbunden sein. Dadurch kann eine Drehbewegung und/oder eine Kraft und/oder ein Drehmoment des Hauptgetriebes mit oder über das zweite Differential in oder an die zweite Fahrzeugachse und/oder umgekehrt einleitbar oder übertragbar sein.

Das erste Schaltelement kann betätigbar, bevorzugt selektiv betätigbar, besonders bevorzugt schliessbar und öffenbar und/oder einrückbar und/oder schaltbar und/oder selektiv eingreifbar sein. Im Speziellen kann das erste Schaltelement als erste Kupplung ausgeführt sein. Im Folgenden kann unter einem Schaltelement, bevorzugt dem ersten Schaltelement und/oder einem zweiten und/oder dritten und/oder vierten und/oder fünften Schaltelement, ein Bauteil verstanden werden, welches je nach Betätigungszustand, eine Relativbewegung zwischen zwei Bauteilen zulassen oder eine feste Verbindung zur Übertragung einer Drehbewegung und/oder einer Kraft und/oder eines Drehmoments bereitstellen kann. Unter einer Relativbewegung ist beispielsweise eine Rotation zweier Bauteile zu verstehen, wobei die Drehzahl des ersten Bauteils und die Drehzahl des zweiten Bauteils voneinander abweichen. Darüber hinaus ist auch die Rotation nur eines der beiden Bauteile denkbar, während das andere Bauteil stillsteht oder in eine entgegengesetzte Richtung rotiert. Bevorzugt handelt es sich bei den Schaltelementen, insbesondere Kupplungen, um reibschlüssige Elemente. Dabei kann über einen Aktuator eine Kraft auf die Verbindungsstelle der beiden Bauteile eingeleitet wird, wodurch eine Reibkraft entsteht, durch welche eine Drehbewegung und/oder oder eine Kraft und/oder ein Drehmoment zwischen den zwei drehbeweglichen Bauteilen übertragbar ist. Im Folgenden kann unter einem nicht betätigten Schaltelement, insbesondere einer nicht betätigten Kupplung, ein geöffnetes Schaltelement, insbesondere eine geöffnete Kupplung, verstanden werden. Dies bedeutet, dass eine Relativbewegung zwischen den beiden Bauteilen möglich ist. Unter einem betätigten Schaltelement, insbesondere einer betätigten Kupplung, kann im Folgenden ein geschlossenes Schaltelement, insbesondere eine geschlossene Kupplung verstanden werden. Dies bedeutet, dass keine Relativbewegung zwischen den beiden Bauteilen möglich ist. Die beiden Bauteile rotieren dementsprechend mit gleicher Drehzahl in dieselbe Richtung. In einer alternativen Ausführungsform können die Schaltelemente, insbesondere Kupplungen, als formschlüssige Elemente ausgeführt sein. Der Aktuator zum Betätigen des ersten Schaltelements, insbesondere der ersten Kupplung, kann hydraulisch, elektromechanisch, elektromagnetisch oder beispielsweise auch pneumatisch betätigbar ausgeführt sein. Der Aktuator, insbesondere ein erster Aktuator kann das erste Schaltelement und/oder ein zweiter Aktuator kann das zweite Schaltelement und/oder ein dritter Aktuator kann das dritte Schaltelement und/oder ein vierter Aktuator kann das vierte Schaltelement und/oder ein fünfter Aktuator kann das fünfte Schaltelement schliessen und öffnen. Mit betätigtem, insbesondere geschlossenem, erstem Schaltelement, kann also eine Drehbewegung und/oder eine Kraft und/oder ein Drehmoment vom ersten Zusatzantriebselement an das Leistungsverzweigungsgetriebe und/oder umgekehrt übertragbar sein. Mit nicht betätigtem, insbesondere geöffnetem, erstem Schaltelement, kann also keine Drehbewegung und/oder keine Kraft und/oder kein Drehmoment vom ersten Zusatzantriebselement an das Leistungsverzweigungsgetriebe übertragbar sein. Mit anderen Worten, das erste Zusatzantriebselement kann also mit dem geschlossenen ersten Schaltelement derart mit dem Leistungsverzweigungsgetriebe verbindbar sein, dass das Leistungsverzweigungsgetriebe mit dem ersten Zusatzantriebselement antreibbar ist. Dadurch kann das erste Zusatzantriebselement derart auf das Leistungsverzweigungsgetriebe einwirken, dass ein Vorlauf der ersten Fahrzeugachse regelbar ist, insbesondere auch einstellbar und/oder verstellbar ist.

Bei dem Hauptantriebselement handelt es sich in bevorzugter Weise um eine Verbrennungskraftmaschine, beispielsweise einen mit Gas, Benzin oder Dieselkraftstoff betriebenen Motor. Alternativ kann das Hauptantriebselement jedoch auch in Form einer elektrischen Maschine realisiert werden. Bei dem ersten Zusatzantriebselement handelt es sich bevorzugt um eine elektrische Maschine, beispielsweise einen Elektromotor. Darüber hinaus ist auch eine Ausführung in Form eines hydraulischen Antriebs, beispielsweise einem hydrostatischen Antriebselement, denkbar. Das erste Zusatzantriebselement kann zwei Drehrichtungen (erste Richtung, zweite Richtung) aufweisen. Die zwei Drehrichtung des ersten Zusatzantriebselements können genutzt werden, um somit einen größeren Regelbereich des Vorlaufs der ersten Fahrzeugachse zu erzielen.

Bei der ersten Fahrzeugachse und der zweiten Fahrzeugachse handelt es sich um Fahrzeugachsen, welche antreibbar ausgeführt sein können. Darüber hinaus können die erste Fahrzeugachse und/oder die zweite Fahrzeugachse lenkbar ausgeführt sein, bevorzugt nur die erste Fahrzeugachse. Im Speziellen kann die erste Fahrzeugachse eine Vorderachse und/oder die zweite Fahrzeugachse eine Hinterachse sein. Das Hauptgetriebe zeichnet sich bevorzugt dadurch aus, dass eine Übersetzung der Drehzahl und/oder der Kraft und/oder des Drehmoments von einem Getriebeeingang zu einem Getriebeausgang stattfindet. Dabei ist der Getriebeeingang an einer Seite des Hauptgetriebes angeordnet, welche bevorzugt dem Hauptantriebselement zugewandt ist. Der Getriebeausgang befindet sich bevorzugt auf einer dem Getriebeeingang gegenüberliegenden Seite des Hauptgetriebes. Das Hauptgetriebe kann beispielsweise als Stufenautomatgetriebe oder als stufenloses Getriebe, insbesondere als CVT (engl. Continuously Variable Transmission) oder als eIVT (engl.

Electrical Infinitely Variable Transmission) oder als hIVT (engl. Hydraulical Infinitely Variable Transmission), oder als Handschaltgetriebe oder auch als Doppelkupplungsgetriebe ausgeführt sein.

Unter einer Welle kann nachfolgend nicht ausschließlich ein beispielsweise zylindrisches, drehbar gelagertes Maschinenelement zur Übertragung von Drehmomenten verstanden werden, sondern vielmehr sind hierunter auch allgemeine Verbindungselemente zu verstehen, die einzelne Bauteile oder Elemente miteinander verbinden. Im Speziellen sind die jeweiligen Bauteile durch die erste, zweite und dritte Welle sowie die Vorgelegewelle mechanisch miteinander verbunden. Dies bedeutet, dass Drehbewegungen und/oder Kräfte und/oder Drehmomente durch die erste, zweite und dritte Welle und die Vorgelegewelle übertragbar sind.

Bei dem Leistungsverzweigungsgetriebe handelt es sich bevorzugt um ein Planetengetriebe beziehungsweise Umlaufrädergetriebe. Ein solches Planetengetriebe kann wenigstens drei Komponenten, insbesondere Zahnräder und/oder Wellen aufweisen. Unter einer Komponente kann dabei ein- und/oder Ausgang zur Übertragung einer Drehbewegung und/oder Kraft und/oder eines Drehmoments in das und/oder aus dem Leistungsverzweigungsgetriebe verstanden werden. In einem Zwei-Komponenten-Betrieb ist eine der Komponenten, insbesondere der Zahnräder und/oder Wellen, festgesetzt, wodurch sich zwangsläufig die Übertragung einer Drehung und/oder einer Kraft und/oder eines Drehmoments der nicht angetriebenen Komponente ergibt. In einem Drei-Komponenten-Betrieb arbeitet das Planetengetriebe als Summiergetriebe oder als Verteilergetriebe. Bei dem Summiergetriebe sind zwei Komponenten treibend ausgeführt und eine Komponente ist getrieben. Im Gegensatz dazu ist bei einem Verteilergetriebe eine Komponente treibend ausgeführt und zwei Komponenten sind getrieben.

Dem leistungsverzweigten Achsantrieb kann eine Steuerungsvorrichtung zugeordnet sein oder der leistungsverzweigte Achsantrieb kann die Steuerungsvorrichtung umfassen. Die Steuerungsvorrichtung kann mit dem leistungsverzweigten Achsantrieb, insbesondere den Bauteilen des leistungsverzweigten Achsantriebs verbunden sein, bevorzugt signalverbunden und/oder signalübertragend und/oder datenleitend verbunden sein. Die Steuerungsvorrichtung kann zur Steuerung und/oder Regelung und/oder Ansteuerung der miteinander verbundenen Bauteile dienen. Insbesondere erfolgt so eine Regelung des Vorlaufs der ersten Fahrzeugachse, beispielsweise unter Berücksichtigung eines aktuell anliegenden Lenkwinkels oder einer Drehzahl oder eines Drehmoments des Hauptantriebselements und/oder der ersten und/oder zweiten Fahrzeugachse während einer Kurvenfahrt und/oder einer Drehzahl und/oder eines Drehmoments. Unter einem Lenkwinkel kann dabei ein Winkel der Räder einer lenkbaren Achse zu den Rädern einer nicht lenkbaren Achse beziehungsweise zu einer Längsachse eines Fahrzeugs verstanden werden. Unter dem Regeln des Vorlaufs der ersten Fahrzeugachse in Abhängigkeit eines Lenkwinkels einer der Fahrzeugachsen beziehungsweise beider Fahrzeugachsen zueinander kann dabei verstanden werden, dass mit einer Lenkwinkeländerung auch eine Änderung des Vorlaufs der ersten Fahrzeugachse einhergeht. Dabei kann der Vorlauf bedarfsgerecht erhöht oder verringert werden. Die Änderung des Vorlaufs kann jedoch auch von weiteren oder anderen Parametern, beispielsweise der Bodenbeschaffenheit oder den Witterungsbedingungen, abhängig sein. Eine Änderung des Vorlaufs kann hierbei durch eine adäquate Steuerung und Regelung automatisiert erfolgen oder durch den Bediener mittels eines Eingabegeräts manuell vorgenommen werden. Dabei sind Anordnungen denkbar, bei denen nur eine der zwei Fahrzeugachsen lenkbar ist oder bei denen beide Fahrzeugachsen, beispielsweise in Form einer Allradlenkung, lenkbar sind.

Das erste Zusatzantriebselement kann sowohl generatorisch, als auch motorisch betreibbar sein. Im generatorischen Betrieb wirkt das erste Zusatzantriebselement bremsend, das heißt, dass eine mechanische Energie aus einer Drehbewegung und/oder eine Kraft und/oder ein Drehmoment beispielsweise in eine elektrische Energie umgewandelt wird. Im Gegensatz dazu kann im motorischen Betrieb des ersten Zusatzantriebselements Energie, insbesondere elektrische Energie, in das erste Zusatzantriebselement eingespeist werden, wodurch das Zusatzantriebselement eine Drehbewegung und/oder eine Kraft und/oder ein Drehmoment erzeugt und das erste Zusatzantriebselement treibend oder antreibend wirkt. Das erste Zusatzantriebselement kann bevorzugt motorisch betrieben werden.

Der leistungsverzweigte Achsantrieb kann auch ein Speicherelement umfassen. Das Speicherelement zeichnet sich insbesondere dadurch aus, dass es Energie aufnehmen, Energie speichern und Energie abgeben kann. Bevorzugt handelt es sich bei dem Speicherelement um eine Batterie, einen Akkumulator oder einen Kondensator zur Speicherung von elektrischer Energie. In weiteren Ausführungen sind jedoch auch Druckspeicher zum Speichern von komprimierten Gasen oder Fluiden oder kinetische Energiespeicher denkbar. Bei einem kinetischen Energiespeicher wird kinetische Energie beispielsweise in rotierenden Massen gespeichert. Das erste Zusatzantriebselement kann über eine Verbindungsleitung mit dem Speicherelement leistungselektronisch verbunden sein. Unter einer leistungselektronischen Verbindung kann verstanden werden, dass erzeugte elektrische Energie beziehungsweise gespeicherte elektrische Energie dem Speicherelement zugeführt oder entnommen oder den Verbrauchern, beispielsweise dem ersten Zusatzantriebselement durch die Verbindungsleitung zugeführt werden kann. Das Speicherelement ist dabei optional vorgesehen. Es dient zur Speicherung von Energie, beispielsweise elektrischer Energie, welche im aktuellen Betriebszustand erzeugt wird, jedoch keine Verwendung findet. In Betriebszuständen mit einem hohen Energiebedarf kann dann die gespeicherte Energie bereitgestellt werden. Es sind jedoch auch Ausführungen von leistungsverzweigten Achsantrieben denkbar, bei denen nur dann Energie entnommen oder erzeugt wird, wenn diese, beispielsweise für den direkten Betrieb des ersten Zusatzantriebselements benötigt wird. Die vom Speicherelement bereitgestellt elektrische Energie kann vom ersten Zusatzantriebselement verwendet werden, um das erste Zusatzantriebselement motorisch zu betreiben, um den Vorlauf der ersten Fahrzeugachse zu erhöhen.

In einem Fahrbetrieb oder Schubbetrieb des Fahrzeugs und/oder des leistungsverzweigten Achsantriebs kann das Hauptantriebselement eine Drehbewegung und/oder eine Kraft und/oder ein Drehmoment über die erste oder mit der ersten Welle in das Hauptgetriebe eingeleitet werden. Die in das Hauptgetriebe eingeleitete Drehbewegung und/oder eine Kraft und/oder ein Drehmoment erfährt in dem Hauptgetriebe eine Übersetzung, soweit eine Gangstufe beziehungsweise eine Fahrstufe eingelegt ist. Die bei eingelegter Gangstufe beziehungsweise Fahrstufe vorliegende Drehbewegung und/oder die vorliegende Kraft und/oder das vorliegende Drehmoment kann am Getriebeausgang des Hauptgetriebes über die dritte Welle in die zweite Fahrzeugachse eingeleitet werden. Darüber hinaus kann die Drehbewegung und/oder die Kraft und/oder das Drehmoment des Hauptantriebselements über das Hauptgetriebe von der dritten Welle über den ersten Radsatz in das Leistungsverzweigungsgetriebe eingeleitet oder übertragen werden.

Mit dem leistungsverzweigten Achsantrieb, insbesondere auch dem landwirtschaftlichen Fahrzeug, können einer oder mehrere Betriebsmodi realisiert werden. Die Steuerungsvorrichtung kann insbesondere zur Regelung und/oder Steuerung und/oder Ansteuerung eines oder mehrerer Betriebsmodi des leistungsverzweigten Achsantriebs oder landwirtschaftlichen Fahrzeugs ausgestaltet oder eingerichtet sein. Im Speziellen kann ein "Generator" Betriebsmodus des leistungsverzweigten Achsantriebs oder Fahrzeugs, insbesondere in einem Fahr- oder Schubbetrieb des leistungsverzweigten Achsantriebs und/oder des landwirtschaftlichen Fahrzeugs, beispielsweise zum Laden des Speicherelements, realisiert werden. Im "Generator" Betriebsmodus des leistungsverzweigten Achsantriebs oder Fahrzeugs kann das erste Zusatzantriebselement generatorisch betrieben werden. Im generatorischen Betrieb des ersten Zusatzantriebselements kann, insbesondere mit geschlossenem erstem Schaltelement, mit dem Hauptantriebselement eine Drehbewegung und/oder eine Kraft und/oder ein Drehmoment in das Leistungsverzweigungsgetriebe und vom Leistungsverzweigungsgetriebe in oder an das erste Zusatzantriebselement eingeleitet oder übertragen werden. Die in das erste Zusatzantriebselement eingeleitete Drehbewegung und/oder der Kraft und/oder des Drehmoments kann vom ersten Zusatzantriebselement in elektrische Energie umgewandelt werden und die elektrische Energie im Speicherelement gespeichert werden. Das Speicherelement ist in dieser Anordnung optional, lediglich das gerade beschriebene Rekuperieren, insbesondere im "Generator" Betriebsmodus des Fahrzeugs, durch den generatorischen Betrieb beim ersten Zusatzantriebselement entfällt.

Bei einem Fahrzeug mit einer lenkbaren ersten Fahrzeugachse können beispielsweise die Bodeneingriffsmittel, insbesondere Räder oder Raupen, eine größere Wegstrecke zurücklegen als die Bodeneingriffsmittel, insbesondere Räder oder Raupen, der zweiten Fahrzeugachse des Fahrzeugs. Bei Fahrzeugen mit einem starren Allradantrieb, das heißt ohne ein Längsdifferenzial, ist ein konstantes Drehzahlverhältnis zwischen der ersten und zweiten Fahrzeugachse des Fahrzeugs eingestellt. Insbesondere bei Kurvenfahrten führt dies jedoch zu einer nachteiligen Lenkbarkeit des Fahrzeugs. Um dies zu verhindern beziehungsweise zu kompensieren wird im Fahrzeug ein konstruktiver Vorlauf vorgesehen. Dies bedeutet, dass beispielsweise die Bodeneingriffsmittel der ersten Fahrzeugachse eine höhere Umfangsgeschwindigkeit aufweisen als die der zweiten Fahrzeugachse. Dazu kann also ein "Vorlauf" Betriebsmodus des leistungsverzweigten Achsantriebs und/oder des landwirtschaftlichen Fahrzeugs realisiert werden, insbesondere in einem Fahr- oder Schubbetrieb des Achsantriebs und/oder des Fahrzeugs und/oder einer Fahrt des Fahrzeugs auf einem Feld, beispielsweise der Bearbeitung des Feldes oder dem Begleiten einer Erntemaschine als Zuggespann mit einem Transportwagen. Im "Vorlauf" Betriebsmodus des leistungsverzweigten Achsantriebs und/oder Fahrzeugs kann das erste Zusatzantriebselement motorisch betrieben werden. Dabei kann bei betätigtem, bevorzugt mit geschlossenem erstem Schaltelement eine zusätzliche Drehbewegung und/oder eine zusätzliche Kraft und/oder ein zusätzliches Drehmoment des ersten Zusatzantriebselement vom ersten Zusatzantriebselement mit dem ersten Schaltelement an das Leistungsverzweigungsgetriebe übertragen werden. Die an das Leistungsverzweigungsgetriebe übertragene Drehbewegung und/oder Kraft und/oder das übertragene Drehmoment des Hauptantriebselements und die an das Leistungsverzweigungsgetriebe übertragene zusätzliche Drehbewegung und/oder Kraft und/oder das übertragene zusätzliche Drehmoment des ersten Zusatzantriebselements können mit dem Leistungsverzweigungsgetriebe überlagert werden und eine resultierende Drehbewegung und/oder eine resultierende Kraft und/oder ein resultierendes Drehmoment, insbesondere mit oder über das erste Differential, auf die erste Fahrzeugachse übertragbar sein. Vorteilhafterweise kann so ein Vorlauf der ersten Fahrzeugachse einstellbar und/oder verstellbar, insbesondere steuerbar und/oder regelbar sein. Mit anderen Worten, das erste Zusatzantriebselement wirkt mit geschlossenem ersten Schaltelement und im motorischen Betrieb derart auf das Leistungsverzweigungsgetriebe ein, dass das erste Zusatzantriebselement eine Drehbewegung und/oder eine Kraft und/oder ein Drehmoment in das Leistungsverzweigungsgetriebe einleitet, welche einer mit dem Hauptantriebselement über das Hauptgetriebe in das Leistungsverzweigungsgetriebe eingeleiteten Drehbewegung und/oder Kraft und/oder einem eingeleiteten Drehmoment überlagert wird, sodass ein Vorlauf der ersten Fahrzeugachse mit der resultierenden Drehbewegung und/oder Kraft und/oder dem resultierenden Drehmoment einstellbar und/oder verstellbar ist. Die Veränderung des Vorlaufs kann dabei vorteilhafterweise eine Änderung der Umfangsgeschwindigkeit der Bodeneingriffsmittel, bevorzugt Räder oder Raupen, an der ersten Fahrzeugachse, insbesondere eine Erhöhung der Umfangsgeschwindigkeit oder einer Reduzierung der Umfangsgeschwindigkeit der Bodeneingriffsmittel an der ersten Fahrzeugachse bewirken. Unter einer Erhöhung des Vorlaufs der ersten Fahrzeugachse ist dabei zu verstehen, dass die Drehzahl der ersten Fahrzeugachse beziehungsweise die Umfangsgeschwindigkeit der Bodeneingriffsmittel der ersten Fahrzeugachse im Vergleich zur zweiten Fahrzeugachse weiter erhöht wird. Analog dazu ist unter einer Reduzierung des Vorlaufs der ersten Fahrzeugachse zu verstehen, dass die Drehzahl der ersten Fahrzeugachse beziehungsweise die Umfangsgeschwindigkeit der Bodeneingriffsmittel der ersten Fahrzeugachse im Vergleich zur zweiten Fahrzeugachse reduziert wird. Im Speziellen kann so eine Veränderung des Vorlaufs der ersten Fahrzeugachse erfolgen. Insbesondere kann so eine Veränderung des Vorlaufs unter Berücksichtigung des aktuell anliegenden Lenkwinkels während einer Kurvenfahrt, erfolgen. Im Speziellen kann bei einem ersten Lenkwinkel der "Generator" Betriebsmodus aktiv sein, d.h. das erste Zusatzantriebselement erzeugt elektrische Leistung, und bei einem zweiten Lenkwinkel, der grösser als der erste Lenkwinkel sein kann, der "Vorlauf" Betriebsmodus aktiv sein, d.h. insbesondere das erste Zusatzantriebselement verbraucht elektrischer Leistung und übeträgt eine Drehzahl und/oder eine Kraft und/oder ein Drehmoment an den leistungsverzweigten Achsantrieb. Der erste Lenkwinkel kann einen Bereich von 0 Grad bis 4 Grad, bevorzugt von 0 bis 8 Grad, besonders bevorzugt in einem Bereich von 0 bis 12 Grad umfassen. Der zweite Lenkwinkel kann einen Bereich >4 Grad, bevorzugt von >8 Grad, besonders bevorzugt von > 12 Grad umfassen. Im "Vorlauf" Betriebsmodus kommt die Lenkunterstützung durch das Zuschalten des ersten Zusatzantriebselements zum Tragen, also durch eine Änderung, insbesondere durch eine Erhöhung oder Reduzierung, der Drehzahl und/oder Kraft und/oder des Drehmoments an der ersten Fahrzeugachse, was insbesondere bei engen Kurvenfahrten im Vorgewende eines Feldes vorteilhaft ist, um kleinere Kurvenradien fahren zu können.

Soweit an dem ersten Zusatzantriebselement keine Drehbewegung und/oder keine Kraft und/oder kein Drehmoment erzeugt wird, stellen sich die Achsdrehzahlen der ersten Fahrzeugachse und der zweiten Fahrzeugachse wie bei einem Allradsystem mit geöffnetem Längsdifferenzial beziehungsweise mit geöffneter Allradkupplung oder einem rein an einer Achse (hier die zweite Fahrzeugachse) angetriebenem Fahrzeug ein. Das erste Zusatzantriebselement befindet sich in diesem Zustand dann in einem Freilauf.

Wesentlich für die Erfindung ist, dass das erste Zusatzantriebselement mit dem ersten oder über das erste Schaltelement mit dem Leistungsverzweigungsgetriebe wahlweise verbindbar ist, so dass mit dem ersten Zusatzantriebselement eine zusätzliche Drehbewegung und/oder eine zusätzliche Kraft und/oder ein zusätzliches Drehmoment an das Leistungsverzweigungsgetriebe übertragen werden kann. Dadurch kann die von dem leistungsverzweigten Achsantrieb auf die erste Fahrzeugachse übertragene Drehzahl und/oder Kraft und/oder das übertragene Drehmoment gegenüber der vom leistungsverzweigten Achsantrieb bereitgestellten Drehzahl und/oder Kraft und/oder das Drehmoment an der zweiten Fahrzeugachse erhöht werden, so dass bei einer engen Kurvenfahrt, insbesondere im Vorgewende eines von dem landwirtschaftlichen Fahrzeug befahrenen Feldes, eine Lenkunterstützung ermöglicht wird. Dies ist insbesondere dann vorteilhaft, wenn bei einem Allradbetrieb des leistungsverzweigten Achsantrieb respektive des landwirtschaftlichen Fahrzeugs das Antreiben der ersten und zweiten Fahrzeugachse drehzahl- oder drehmomentgekoppelt erfolgen. Durch eine Regelung und/oder Steuerung, insbesondere durch eine Drehzahl- und/oder Drehmomentregelung, des ersten Zusatzantriebselements, beispielsweise mit der Steuerungsvorrichtung, kann vorteilhafterweise eine Längsdifferenzialfunktion mit variabler Drehmomentverteilung zwischen der ersten Fahrzeugachse und der zweiten Fahrzeugachse dargestellt werden. Eingangsdaten hierfür können beispielsweise die Drehzahl oder die Drehmomente an dem Hauptantriebselement und/oder der Fahrzeugachsen sein. Hierdurch kann die Traktion des Fahrzeugs situationsbedingt verbessert werden. Bei einem konstanten Drehmomentverhältnis zwischen den Fahrzeugachsen kann eine Längsdifferenzialfunktion mit konstanter Drehmomentverteilung dargestellt werden. Durch die Regelung der Drehmomentverteilung können die Fahreigenschaften des Fahrzeugs gezielt geregelt und den jeweiligen Umgebungsbedingungen angepasst werden. Durch die entsprechende Ansteuerung des ersten Zusatzantriebselements kann somit auch im Bremsbetrieb eine Verteilung der Bremsleistung zwischen den Fahrzeugachsen realisiert werden.

In Ausgestaltung der Erfindung umfasst der leistungsverzweigte Achsantrieb eine Vorgelegewelle. Das erste Zusatzantriebselement ist mit dem ersten oder über das erste Schaltelement mit der Vorgelegewelle verbindbar, bevorzugt antreibbar verbindbar, besonders bevorzugt lösbar antreibbar verbindbar. Ebenso kann das Leistungsverzweigungsgetriebe mit der Vorgelegewelle verbunden, insbesondere antreibbar verbunden sein. Über die Vorgelegewelle kann das Leistungsverzweigungsgetriebe also mit dem ersten Zusatzantriebselement verbunden, insbesondere antreibbar verbunden sein. Mit anderen Worten, das erste Zusatzantriebselement kann also mit dem ersten Schaltelement derart mit der Vorgelegewelle verbindbar sein, dass das Leistungsverzweigungsgetriebe mit dem ersten Zusatzantriebselement antreibbar ist. Das erste Schaltelement kann zumindest teilweise auf oder an der Vorgelegewelle angeordnet sein. Ebenso kann das erste Schaltelement zumindest teilweise drehfest mit der Vorgelegewelle verbunden sein. Dabei kann eine Drehbewegung und/oder eine Kraft und/oder ein Drehmoment des ersten Zusatzantriebselement mit dem ersten Schaltelement vom ersten Zusatzantriebselement an die Vorgelegewelle und von der Vorgelegewelle an das Leistungsverzweigungsgetriebe übertragbar sein. Dadurch können die oben genannten Vorteile des leistungsverzweigten Getriebes realisiert werden. Darüber hinaus kann dadurch eine effiziente Übertragung der Drehzahl und/oder des Drehmoments vom ersten Zusatzantrieb an das Leistungsverzweigungsgetriebe realisiert werden.

Gemäß einer bevorzugten Weiterbildung umfasst der leistungsverzweigte Achsantrieb einen zweiten und dritten Radsatz. Das erste Schaltelement ist über den oder mit dem zweiten Radsatz mit dem ersten Zusatzantriebselement verbindbar oder verbunden, bevorzugt lösbar verbindbar oder verbunden, besonders bevorzugt lösbar antreibbar verbindbar oder verbunden, und die Vorgelegewelle über den dritten Radsatz mit dem Leistungsverzweigungsgetriebe verbunden ist, bevorzugt antreibbar verbunden ist. Mit dem zweiten Radsatz kann eine Drehbewegung und/oder eine Kraft und/oder ein Drehmoment des ersten Zusatzantriebelements vom ersten Zusatzantriebelement zum ersten Schaltelement und/oder umgekehrt übertragen oder eingeleitet werden und vom ersten Schaltelement weiter an oder in die Vorgelegewelle und/oder umgekehrt übertragen oder eingeleitet werden, insbesondere wenn das erste Schaltelement geschlossen ist. Die Vorgelegewelle wiederum kann mit dem ersten oder über das erste Schaltelement mit dem zweiten Radsatz verbindbar, bevorzugt antreibbar verbindbar, besonders bevorzugt lösbar antreibbar verbindbar sein. Mit geschlossenem erstem Schaltelement, kann also eine Drehbewegung und/oder eine Kraft und/oder ein Drehmoment vom ersten Zusatzantriebselement an den zweiten Radsatz und vom zweiten Radsatz über das erste oder mit dem ersten Schaltelement an die Vorgelegewelle und weiter an das Leistungsverzweigungsgetriebe und/oder umgekehrt übertragbar sein. Das Leistungsverzweigungsgetriebe kann über den oder mit dem dritten Radsatz mit der Vorgelegewelle verbunden, insbesondere antreibbar verbunden sein. Mit dem dritten Radsatz kann eine Drehbewegung und/oder eine Kraft und/oder ein Drehmoment der Vorgelegewelle an oder in das Leistungsverzweigungsgetriebe und/oder umgekehrt übertragen oder eingeleitet werden. Dadurch kann eine Drehbewegung und/oder eine Kraft und/oder ein Drehmoment vom ersten Zusatzantriebselement über den zweiten Radsatz an das geschlossene erste Schaltelement weiter an die Vorgelegewelle und von der Vorgelegewelle über den dritten Radsatz an das Leistungsverzweigungsgetriebe und vom Leistungsverzweigungsgetriebe, insbesondere über das erste Differential, auf die erste Fahrzeugachse übertragbar sein. Der zweite Radsatz kann auch ein zweites Zahnradpaar, insbesondere ein erstes Schaltrad und ein drittes Festrad umfassen. Das dritte Festrad kann mit dem ersten Zusatzantriebselement, insbesondere einer Abtriebswelle des ersten Zusatzantriebselements, verbunden sein, bevorzugt antreibbar verbunden, besonders bevorzugt drehfest und/oder antreibbar verbunden sein. Das erste Schaltrad kann drehbar auf der Vorgelegewelle gelagert sein, insbesondere frei drehbar und/oder axial verschiebbar auf der Vorgelegewelle gelagert sein. Ebenso kann das erste Schaltrad mit einer Seite des ersten Schaltelements verbunden, bevorzugt drehfest und/oder antreibbar verbunden sein. Das erste Schaltrad kann mit dem dritten Festrad kämmen, sich also insbesondere in ständigem Kämmeingriff mit diesem befinden. Das erste Schaltelement kann also über das erste oder mit dem ersten Schaltrad und über das dritte oder mit dem dritten Festrad mit dem ersten Zusatzantriebselement verbunden, bevorzugt antreibbar verbunden sein. Die Vorgelegewelle wiederum kann mit dem ersten oder über das erste Schaltelement mit dem ersten Schaltrad verbunden, bevorzugt antreibbar verbunden, besonders bevorzugt lösbar antreibbar verbunden sein. Bei geschlossenem erstem Schaltelement kann die Vorgelegewelle über das erste Schaltelement mit dem ersten Schaltrad drehfest verbunden sein, sodass mit dem dritten Festrad eine Drehbewegung und/oder eine Kraft und/oder ein Drehmoment des ersten Zusatzantriebselement übertragbar ist. Das erste Schaltrad kann mehr Zahnradzähne als das dritte Festrad aufweisen. Das Übersetzungsverhältnis i von erstem Schaltrad zu drittem Festrad kann, insbesondere wenn das erste Zusatzantriebselement motorisch betrieben wird,

$$|i_1| = \frac{z_{Abtrieb1}}{z_{Antrieb1}} \geq 1{,}2$$

sein, wobei $z_{Abtrieb1}$ = Anzahl der Zähne des ersten Schaltrads und $z_{Antrieb1}$ = Anzahl der Zähne des dritten Festrads gilt. Bevorzugt kann das Übersetzungsverhältnis $|i_1| \geq 2$, besonders bevorzugt $|i_1| \geq 3$, im Speziellen $|i_1| \geq 3{,}5$ sein. Der dritte Radsatz kann ein drittes Zahnradpaar, insbesondere ein viertes und ein fünftes Festrad umfassen. Das vierte Festrad kann mit der Vorgelegewelle V und das fünfte Festrad mit dem Leistungsverzweigungsgetriebe, insbesondere einem Sonnenrad des Leistungsverzweigungsgetriebe verbunden sein, bevorzugt drehfest und/oder antreibbar verbunden sein. Das vierte Festrad kann mit dem fünften Festrad kämmen, sich also insbesondere in ständigem Kämmeingriff mit diesem befinden. Mit dem vierten und fünften Festrad kann also eine Drehbewegung und/oder eine Kraft und/oder ein Drehmoment von der Vorgelegewelle an das Leistungsverzweigungsgetriebe und/oder umgekehrt übertragbar sein. Das fünfte Festrad kann mehr Zahnradzähne als das vierte Festrad aufweisen. Das Übersetzungsverhältnis i von fünftem Festrad zu viertem Festrad kann, insbesondere wenn das erste Zusatzantriebselement motorisch betrieben wird,

$$|i_2| = \frac{z_{Abtrieb2}}{z_{Antrieb2}} \geq 1{,}2$$

sein, wobei $z_{Abtrieb2}$ = Anzahl der Zähne des fünften Schaltrads und $z_{Antrieb2}$ = Anzahl der Zähne des vierten Festrads gilt. Bevorzugt kann das Übersetzungsverhältnis $|i_2| \geq 2$, besonders bevorzugt $|i_2| \geq 3$, im Speziellen $|i_2| \geq 3{,}5$ sein. Vorteilhafterweise kann mit dem zweiten und dritten Radsatz die vom ersten Zusatzantriebselement zum Leistungsverzweigungsgetriebe übertragen Drehzahl abgesenkt und das übertragene Drehmoment erhöht werden. Dadurch kann also eine Übertragung der Drehzahl und/oder des Drehmoments vom ersten Zusatzantrieb an das Leistungsverzweigungsgetriebe realisiert und verbessert werden. Ebenso kann so vorteilhafterweise ein Vorlauf der ersten Fahrzeugachse effizienter einstellbar und/oder verstellbar, insbesondere effizienter steuerbar und/oder regelbar sein.

In Ausgestaltung der Erfindung ist das Leistungsverzweigungsgetriebe als Planetengetriebe ausgeführt. Ein Hohlrad des Leistungsverzweigungsgetriebes kann über den oder mit dem ersten Radsatz mit der dritten Welle verbunden sein, insbesondere antreibbar verbunden. Im Speziellen kann das Hohlrad mit dem zweiten Festrad verbunden sein, bevorzugt drehfest und/oder antreibbar verbunden sein. Dadurch kann eine Kraft und/oder eine Drehbewegung und/oder ein Drehmoment vom Hauptantriebselement über das Hauptgetriebe an die dritte Welle und weiter über den ersten Radsatz an das Hohlrad und somit insbesondere das Leistungsverzweigungsgetriebe bzw. das Planetengetriebe übertragbar sein. Die erste Fahrzeugachse kann über die zweite oder mit der zweiten Welle mit einem Planetenträger beziehungsweise einem Steg des Leistungsverzweigungsgetriebes verbunden, insbesondere antreibbar verbunden sein. Im Speziellen kann der Planetenträger mit der zweiten Welle verbunden sein, bevorzugt drehfest und/oder antreibbar verbunden sein. Dadurch kann eine Kraft und/oder eine Drehbewegung und/oder ein Drehmoment vom Planetenträger des Leistungsverzweigungsgetriebes auf die zweite Welle und weiter, insbesondere über das erste Differential, an oder in die erste Fahrzeugachse übertragbar oder einleitbar sein. Ebenso kann auch umgekehrt eine Kraft und/oder eine Drehbewegung und/oder ein Drehmoment in das Leistungsverzweigungsgetriebe übertragbar oder einleitbar sein. An dem Planetenträger kann ein Planetensatz, insbesondere eines oder mehrere Planetenräder, drehbar gelagert, die jeweils mit Sonnenrad und Hohlrad kämmen, sich also insbesondere in ständigem Kämmeingriff mit diesen befinden. Der Planetensatz kann insbesondere einen Satz von Planetenrädern aufweisen. Der Planetensatz kann drei Planetenräder umfassen. Darüber hinaus ist das Sonnenrad des Leistungsverzweigungsgetriebes über das fünfte Festrad und das vierte Festrad, und insbesondere weiter über die Vorgelegewelle und das erste Schaltelement und den zweiten Radsatz, mit dem ersten Zusatzantriebselement verbunden, insbesondere antreibbar verbunden. Dadurch kann eine Kraft und/oder ein Drehmoment vom ersten Zusatzantriebselement über den zweiten Radsatz und das erste Schaltelement an die Vorgelegewelle und von der Vorgelegewelle über das vierte Festrad und das fünfte Festrad an das Sonnenrad des Leistungsverzweigungsgetriebes übertragbar sein. Dadurch können die oben genannten Vorteile des leistungsverzweigten Achsantriebs realisiert werden.

Gemäß der Erfindung ist zwischen dem ersten Zusatzantriebselement und dem Leistungsverzweigungsgetriebe eine erste Bremse angeordnet. Der leistungsverzweigte Achsantrieb umfasst also zusätzlich die erste Bremse. Die erste Bremse kann auf der Vorgelegewelle angeordnet sein. Die erste Bremse kann zumindest teilweise mit der Vorgelegewelle verbunden sein, bevorzugt drehfest verbunden sein. Die Vorgelegewelle kann mit der ersten Bremse gegen Drehung haltbar oder gehemmt sein, bevorzugt lösbar gegen Drehung haltbar oder gehemmt sein. Mit anderen Worten, unter einer Bremse, insbesondere der ersten und einer zweiten und dritten Bremse, kann ein reibschlüssiges Bauteil verstanden werden, welches auf der einen Seiten mit einem feststehenden Element, beispielsweise einem Gehäuse oder einem Fahrzeugrahmen, und auf einer anderen Seite mit einem rotierbaren Element, beispielsweise einer Welle, verbunden ist. Dabei wird in der Regel über einen Aktuator eine Kraft auf die Verbindungsstelle eingeleitet, wodurch eine Reibkraft entsteht, durch welche beispielsweise eine Drehbewegung des drehbaren Bauteils gegen das feststehende Bauteil abgestützt und somit die Drehbewegung gehemmt beziehungsweise verhindert wird. Im Speziellen kann das rotierende Element der ersten Bremse mit der Vorgelegewelle verbunden, insbesondere drehfest verbunden sein, und das feststehende Element mit einem Getriebegehäuse oder Gehäuse oder einem Fahrzeugrahmen. Im Folgenden ist unter einer nicht betätigten Bremse eine geöffnete Bremse zu verstehen. Dies bedeutet, dass sich das rotierbare Bauteil im Freilauf befindet, das heißt, dass die Bremse bevorzugt keinen Einfluss auf die Drehzahl des rotierbaren Bauteils nimmt. Bei betätigter beziehungsweise geschlossener Bremse erfolgt eine Reduzierung der Drehzahl des rotierbaren Bauteils. Je nach Anwendung kann die Reduzierung der Drehzahl des rotierbaren Bauteils bis hin zum Stillstand erfolgen. Dies bedeutet dann, dass eine feste Verbindung zwischen dem rotierbaren Bauteil und dem feststehenden Bauteil herstellbar ist. Bei geschlossener erster Bremse kann somit ein rein mechanischer Betrieb des leistungsverzweigten Achsantriebs realisiert werden, d.h. es liegt starre Verbindung zwischen erster und zweiter Fahrzeugachse vor, sodass eine Drehbewegung und/oder eine Kraft und/oder ein Drehmoment kann nur rein mechanisch zwischen den Fahrzeugachsen übertragen werden. Alternativ dazu sind auch Ausführungen denkbar, bei denen die Bremse im betätigten Zustand geöffnet und im nicht betätigten Zustand geschlossen ist. In weiteren alternativen Ausführungsformen ist auch eine formschlüssige Bremse denkbar. Bei formschlüssigen Verbindungen erfolgt eine, beispielsweise drehfeste, Verbindung zweier Bauteile aufgrund des Eingriffs der Konturen der zu verbindenden Bauteile. Formschlüssige Verbindungen weisen insbesondere den Vorteil auf, dass sie bei vergleichsweise geringen Abmessungen und Gewicht hohe Kräfte und Momente übertragen können. Darüber hinaus ist die aufzubringende Energie für die Verbindungsherstellung wesentlich geringer, als bei reibschlüssigen Verbindungen, wodurch beispielsweise der Aktuator kleiner ausgelegt werden kann. Der Aktuator zum Betätigen der Bremse kann hydraulisch, elektromechanisch, elektromagnetisch oder beispielsweise auch pneumatisch betätigbar ausgeführt sein. Der Aktuator zur Betätigung der Bremse kann dabei wie der Aktuator zur Betätigung des Schaltelements ausgeführt sein. Vorteilhafterweise kann mit der ersten Bremse, wie bereits oben beschrieben, ein Fahrzustand realisierbar sein, bei dem eine starre Verbindung zwischen der ersten und zweiten Fahrzeugachse erforderlich ist. In diesem Fall muss das erste Zusatzantriebselement nicht permanent einen Gegenmoment aufbauen und somit elektrische Energie verbrauchen. Alternativ zur ersten Bremse kann der leistungsverzweigte Achsantrieb auch ein fünftes Schaltelement umfassen. In diesem Fall wird keine erste Bremse verwendet, sondern das fünfte Schaltelement. Das fünfte Schaltelement kann betätigbar, bevorzugt selektiv betätigbar, besonders bevorzugt schliessbar und öffenbar und/oder einrückbar und/oder schaltbar und/oder selektiv eingreifbar sein. Das fünfte Schaltelement kann als fünfte Kupplung ausgebildet sein. Mit betätigtem, insbesondere geschlossenem, fünftem Schaltelement, kann also insbesondere nur eine mechanische Drehbewegung und/oder eine mechanische Kraft und/oder ein mechanisches Drehmoment übertragen werden. Wenn das fünfte Schaltelement geschlossen ist, führt dies zu einer Blockierung des Leistungsverzweigungsgetriebes und dazu, dass sich das Hohlrad oder der Ring des Leistungsverzweigungsgetriebes mit der gleichen Drehzahl wie das Sonnenrad und die zweite Welle und/oder der Träger dreht. Das Übersetzungsverhältnis i ist in diesem Fall i=1 und die Drehzahl und/oder Kraft und/oder das Drehmoment kann nur mechanisch übertragen werden. Mit nicht betätigtem, insbesondere geöffnetem, fünftem Schaltelement kann eine Drehbewegung und/oder eine Kraft und/oder ein Drehmoment vom ersten Zusatzantriebselement an das Leistungsverzweigungsgetriebe übertragbar sein. Mit anderen Worten, mit betätigtem, insbesondere geschlossenem, fünftem Schaltelement können der dritte Radsatz, insbesondere das fünfte Festrad, und/oder das Leistungsverzweigungsgetriebe, insbesondere das Sonnenrad, mit dem fünften oder über das fünfte Schaltelement mit der zweiten Welle verbunden sein, insbesondere drehfest miteinander verbunden sein. Wenn das fünfte Schaltelement geschlossen ist, beträgt die relative Drehzahl des Sonnenrads und der zweiten Welle 0 U/min. In diesem Fall kann eine Drehbewegung und/oder eine Kraft und/oder ein Drehmoment nur mechanisch übertragen werden. Es bietet auch die Möglichkeit, das erste Zusatzantriebselement zu verwenden, um eine Kraft und/oder ein Drehmoment aus dem leistungsverzweigten Achsantrieb, insbesondere in den oben genannten "Parkbremse" und "Fahrzeugachsen-Bremse" Betriebsmodi zu extrahieren.

Gemäß einer bevorzugten Weiterbildung umfasst der leistungsverzweigte Achsantrieb ein zweites Zusatzantriebselement. Das zweite Zusatzantriebselement kann mit dem Hauptantriebselement, insbesondere über oder mit der ersten Welle, verbunden, bevorzugt antreibbar verbunden sein. Die vom Hauptantriebselement erzeugbare Kraft und/oder die erzeugbare Drehbewegung und/oder das erzeugbare Drehmoment ist in oder an das zweite Zusatzantriebselement und/oder das Hauptgetriebe einleitbar oder übertragbar. Das durch das Hauptantriebselement erzeugbare Drehmoment und/oder die erzeugbare Kraft und/oder die erzeugbare Rotationsbewegung kann bevorzugt über eine Übersetzungsstufe, beispielsweise einen Riemen- oder Kettentrieb oder einen vierten Radsatz oder eine vierte Welle, in das zweite Zusatzantriebselement einleitbar und/oder übertragbar sein. Das zweite Zusatzantriebselement kann zwei Drehrichtungen (erste Richtung, zweite Richtung) aufweisen. Beispielsweise kann das durch das Hauptantriebselement erzeugbare Drehmoment und/oder die erzeugbare Kraft und/oder die erzeugbare Drehbewegung über die erste Welle auf die Übersetzungsstufe und dann an das zweite Zusatzantriebselement übertragbar sein. Die Übersetzungsstufe, insbesondere der vierte Radsatz, kann auch ein viertes Zahnradpaar, insbesondere ein sechstes und ein siebtes Festrad umfassen. Das sechste Festrad kann mit der ersten Welle und das siebte Festrad beispielsweise mit einer Abtriebswelle des zweiten Zusatzantriebselements verbunden, bevorzugt drehfest verbunden sein. Das sechste Festrad kann mit dem siebten Festrad kämmen, sich also insbesondere in ständigem Kämmeingriff mit diesem befinden. Also kann mit dem sechsten und siebten Festrad eine Drehbewegung und/oder eine Kraft und/oder ein Drehmoment von der ersten Welle an oder in das zweite Zusatzantriebselement übertragen oder eingeleitet werden. Bei dem zweiten Zusatzantriebselement handelt es sich bevorzugt um eine elektrische Maschine, besonders bevorzugt einen Elektromotor. Darüber hinaus ist auch eine Ausführung in Form eines hydraulischen Antriebs, beispielsweise einem hydrostatischen Antriebselement, denkbar. Das zweite Zusatzantriebselement kann über die Verbindungsleitung mit dem Speicherelement und/oder dem ersten Zusatzantriebselement leistungselektronisch verbunden. Das zweite Zusatzantriebselement kann ausserdem, insbesondere über die Verbindungsleitung und/oder eine weitere Verbindungsleitung, mit einem Nebenabtrieb leistungselektronisch verbunden sein. Wie bereits erwähnt, ist unter einer leistungselektronischen Verbindung zu verstehen, dass erzeugte elektrische Energie beziehungsweise gespeicherte elektrische Energie dem Speicherelement zugeführt oder entnommen oder den Verbrauchern, beispielsweise dem Nebenabtrieb und/oder dem zweiten Zusatzantriebselement zugeführt werden kann. Der Nebenabtrieb ist dabei, ebenso wie das Speicherelement, optional vorgesehen. Dies bedeutet, dass nicht zwingend ein Nebenabtrieb vorgesehen sein muss. Darüber hinaus sind jedoch auch Ausführungen mit mehr als einem Nebenabtrieb denkbar. Es sind auch Ausführungen von leistungsverzweigten Achsantrieben denkbar, bei denen dem Speicherelement nur dann Energie entnommen oder erzeugt wird, wenn diese, beispielsweise für den direkten Betrieb des Nebenabtriebs und/oder des zweiten Zusatzantriebselements, benötigt wird.

Das zweite Zusatzantriebselement kann sowohl generatorisch, als auch motorisch betreibbar sein. Im generatorischen Betrieb wirkt das zweite Zusatzantriebselement bremsend, das heißt, dass eine mechanische Energie aus einer Drehbewegung und/oder eine Kraft und/oder ein Drehmoment beispielsweise in eine elektrische Energie umgewandelt wird. Im Gegensatz dazu wird im motorischen Betrieb des zweite Zusatzantriebselements Energie, insbesondere elektrische Energie, in das zweite Zusatzantriebselement eingespeist, wodurch eine Drehbewegung und/oder eine Kraft und/oder ein Drehmoment erzeugt wird, wodurch das zweite Zusatzantriebselement treibend oder antreibend wirkt. Das erste und zweite Zusatzantriebselement können gleichzeitig beide generatorisch betrieben werden, beide motorisch betrieben werden oder eines generatorisch und eines motorisch betrieben werden.

Im "Vorlauf" Betriebsmodus kann das zweite Zusatzantriebselement generatorisch und das erste Zusatzantriebselement motorisch betrieben werden. Das zweite Zusatzantriebselement kann generatorisch betreibbar sein, das heißt, dass die eingeleitete Energie in Form der Drehbewegung und/oder der Kraft und/oder des Drehmoments in elektrische Energie umgewandelt wird. Diese elektrische Energie kann zum Betreiben des Nebenabtriebs, bevorzugt elektrischen Nebenabtriebs verwendet werden und/oder elektrische Energie kann in dem optionalen Speicherelement gespeichert werden und/oder die elektrische Energie kann dem ersten Zusatzantriebselement bereitgestellt werden, wobei das erste Zusatzantriebelement bevorzugt motorisch betrieben wird. Dadurch können vorteilhafterweise die oben genannten Vorteile der leistungsverzweigten Achsantriebs erreicht werden. Soweit sich das Hauptgetriebe in einer Neutralstellung befindet, wird keine Drehbewegung und/oder Kraft und/oder kein Drehmoment des Hauptantriebselements auf die dritte Welle übertragen. Vielmehr wird dann die Drehbewegung und/oder Kraft und/oder das Drehmoment ausschließlich in oder an das zweite Zusatzantriebselement eingeleitet oder übertragen. Soweit das zweite Zusatzantriebselement generatorisch betrieben wird, wird elektrische Energie erzeugt. Diese kann dann abermals zum Betreiben des Nebenabtriebs und/oder des ersten Zusatzantriebselements verwendet und/oder in dem Speicherelement gespeichert werden.

Das zweite Zusatzantriebselement kann auch motorisch betrieben werden. Das zweite Zusatzantriebselement kann zusätzlich zu der durch das Hauptantriebselement eingeleiteten Drehbewegung und/oder Kraft und/oder dem eingeleiteten Drehmoment ebenfalls eine Drehbewegung und/oder Kraft und/oder ein Drehmoment in das Hauptgetriebe einleiten. Somit kann beispielsweise kurzzeitig eine Erhöhung der Antriebsleistung erfolgen, soweit dies durch den jeweiligen Fahrzustand erforderlich ist.

Zum Laden des Speicherelements können beispielsweise aber auch das erste Zusatzantriebselement und/oder das zweite Zusatzantriebselement generatorisch betrieben werden, insbesondere im "Generator" Betriebsmodus oder Fahr- oder Schubbetrieb. Dazu kann mit dem Hauptantriebselement eine Drehbewegung und/oder eine Kraft und/oder ein Drehmoment in das zweite Zusatzantriebselement und über das Hauptgetriebe in das Leistungsverzweigungsgetriebe und weiter in das erste Zusatzantriebselement eingeleitet oder übertragen werden.

In Ausgestaltung der Erfindung ist oder sind auf oder an der zweiten Welle ein zweites Schaltelement und/oder eine zweite Bremse angeordnet. Das zweite Schaltelement und/oder die zweite Bremse können zwischen dem Leistungsverzweigungsgetriebe und der ersten Fahrzeugachse, insbesondere dem Leistungsverzweigungsgetriebe und dem ersten Differential angeordnet sein. Das zweite Schaltelement kann dabei zwischen der zweiten Bremse und der ersten Fahrzeugachse, insbesondere der zweiten Bremse und dem ersten Differential angeordnet sein. Das Leistungsverzweigungsgetriebe kann über das zweite oder mit dem zweiten Schaltelement mit der ersten Fahrzeugachse, insbesondere dem ersten Differential, verbindbar, bevorzugt lösbar verbindbar, besonders bevorzugt lösbar drehfest und/oder lösbar antreibbar verbindbar sein. Das zweite Schaltelement ist bevorzugt eine zweite Kupplung. Mit anderen Worten, das zweite Schaltelement kann also auf einer Seite über einen Teil der zweiten Welle mit der ersten Fahrzeugachse, insbesondere dem ersten Differential, verbunden sein und auf einer anderen Seite über einen anderen Teil der zweiten Welle mit dem Leistungsverzweigungsgetriebe verbunden sein. Das zweite Schaltelement kann betätigbar, bevorzugt selektiv betätigbar, besonders bevorzugt schliessbar und öffenbar und/oder einrückbar und/oder schaltbar und/oder selektiv eingreifbar sein. Mit betätigtem, insbesondere geschlossenem, zweitem Schaltelement kann also eine Drehbewegung und/oder eine Kraft und/oder ein Drehmoment vom Leistungsverzweigungsgetriebe an die erste Fahrzeugachse, insbesondere über das erste Differential, und/oder umgekehrt übertragbar sein. Mit nicht betätigtem, insbesondere geöffnetem, zweitem Schaltelement, kann also keine Drehbewegung und/oder keine Kraft und/oder kein Drehmoment vom Leistungsverzweigungsgetriebe an die erste Fahrzeugachse, insbesondere über das erste Differential, und/oder umgekehrt übertragbar sein. Mit anderen Worten, das Leistungsverzweigungsgetriebe kann also mit dem geschlossenen zweiten Schaltelement derart mit der ersten Fahrzeugachse, insbesondere über das erste Differential, verbindbar sein, dass die erste Fahrzeugachse mit dem Leistungsverzweigungsgetriebe und/oder umgekehrt antreibbar ist.

Die zweite Bremse kann insbesondere zwischen dem zweiten Schaltelement und dem Leistungsverzweigungsgetriebe angeordnet sein. Die zweite Bremse kann auf der zweiten Welle angeordnet sein, bevorzugt mit der zweiten Welle verbunden sein, besonders bevorzugt mit der zweiten Welle drehfest verbunden sein. Die zweite Welle kann mit der zweiten Bremse gegen Drehung haltbar sein, bevorzugt lösbar gegen Drehung haltbar sein. Die zweite Welle kann mit der zweiten Bremse lösbar, beispielsweise mit einem Getriebegehäuse oder einem Rahmen, verbindbar sein, bevorzugt lösbar gegen Drehung haltbar sein. Mit anderen Worten, die zweite Bremse kann also auf einer Seite mit der zweiten Welle verbunden sein und auf einer anderen Seite in Bezug auf eine Drehbewegung gehalten oder gehemmt sein, beispielsweise mit dem Getriebegehäuse oder Rahmen verbunden sein. Im Speziellen kann das rotierende Element der zweiten Bremse mit der zweiten Welle verbunden, insbesondere drehfest verbunden sein, und das feststehende Element der zweiten Bremse mit einem Getriebegehäuse oder einem Rahmen verbunden sein, wodurch die zweite Welle in Bezug auf eine Drehbewegung gehalten und/oder gehemmt wird. Dies ist beispielsweise dann von Vorteil, wenn ein Fahrzustand gewünscht ist, bei dem eine Drehbewegung und/oder eine Kraft und/oder ein Drehmoment vom ersten Zusatzantriebselement oder der ersten Fahrzeugachse, insbesondere nur, an die zweite Fahrzeugachse oder keine Drehbewegung und/oder keine Kraft und/oder kein Drehmoment an die erste und zweite Fahrzeugachse übertragen werden soll. Mit der zweiten Bremse und/oder dem zweiten Schaltelement können mit dem leistungsverzweigten Achsantrieb weitere Betriebsmodi realisiert werden.

Ein weiterer Betriebsmodus kann ein "Voll-Elektrisch" Betriebsmodus sein. Dabei können das erste und zweite Schaltelement sowie die zweite Bremse derart betätigbar sein, dass die zweite Fahrzeugachse nur über das erste Zusatzantriebselement antreibbar ist. Im "Voll-Elektrisch" Betriebsmodus werden das erste Schaltelement betätigt, insbesondere geschlossen, und das zweite Schaltelement betätigt, insbesondere geöffnet, und die zweite Bremse betätigt, insbesondere geschlossen. Dadurch kann ein Leistungsfluss vom ersten Zusatzantriebselement an die zweite Fahrzeugachse realisiert werden, also insbesondere eine Drehbewegung und/oder eine Kraft und/oder ein Drehmoment vom ersten Zusatzantriebselement an die zweite Fahrzeugachse übertragen werden. An oder von der geschlossenen zweiten Bremse kann eine Drehbewegung und/oder eine Kraft und/oder ein Drehmoment, welche vom Leistungsverzweigungsgetriebe an die zweite Welle, also insbesondere in Richtung der ersten Fahrzeugachse, übertragen wird, gehalten und/oder gehemmt und/oder abgestützt werden. Im Speziellen kann die zweite Welle mit der zweiten Bremse in Bezug auf eine Drehbewegung gehalten oder gehemmt werden. Beispielsweise kann die zweite Welle mit der zweiten Bremse gegen das Getriebegehäuse oder den Rahmen festgesetzt werden. Im "Voll-Elektrisch" Betriebsmodus kann der Antrieb der zweiten Fahrzeugachse durch das erste Zusatzantriebselement unabhängig vom Betriebszustand des Hauptantriebselementes erfolgen. Insbesondere kann das Hauptantriebselement abgeschaltet oder vom Hauptgetriebe entkoppelt oder das Hauptgetriebe im Neutralgang sein. Der Betriebsmodus "Voll-Elektrisch" kann mittels der Ein- und Ausgabeeinheit auswählbar sein. Vorteilhafterweise kann somit ein rein elektrischer Betrieb des leistungsverzweigten Achsantriebs, insbesondere auch des Fahrzeugs, erreicht werden. Weiter ist von Vorteil, dass mit dem "Voll-Elektrisch" Betriebsmodus beispielsweise das ein elektrisch betriebener Kriechgang und/oder das Rangieren des landwirtschaftlichen Fahrzeugs, insbesondere auf einer Hofstätte, realisiert werden kann. Im Speziellen kann das landwirtschaftliche Fahrzeug im "Voll-Elektrisch" Betriebsmodus vorteilhafterweise fernbedient werden, beispielsweise, um das Fahrzeug an ein Arbeitsgerät zu koppeln.

Ein weiterer Betriebsmodus kann ein "Parkbremse" Betriebsmodus sein. Dabei können das zweite Schaltelement und die erste und zweite Bremse derart betätigbar sein, dass der leistungsverzweigte Achsantrieb als eine Parkbremse realisierbar ist, insbesondere also das Fahrzeug in Position gehalten wird. Im "Parkbremse" Betriebsmodus werden das zweite Schaltelement betätigt, insbesondere geschlossen, und die erste Bremse betätigt, insbesondere geschlossen, und die zweite Bremse betätigt, insbesondere geschlossen. Dadurch kann ein Leistungsfluss, also eine Drehbewegung und/oder eine Kraft und/oder ein Drehmoment, von der ersten und/oder zweiten Fahrzeugachse an den leistungsverzweigten Achsantrieb übertragen und abgestützt werden. Dadurch wird das Fahrzeug in seiner Position gehalten. Insbesondere können eine Drehbewegung und/oder Kraft und/oder ein Drehmoment, die von der ersten Fahrzeugachse auf die zweite Welle an die zweite Bremse übertragen und die zweite Welle von der zweiten Bremse in Bezug auf eine Übertragung der Drehbewegung und/oder der Kraft und/oder des Drehmoments gehemmt, insbesondere gehalten und/oder abgestützt werden. Beispielsweise kann die zweite Welle mit der zweiten Bremse gegen das Getriebegehäuse oder den Rahmen festgesetzt werden. Insbesondere können auch eine Drehbewegung und/oder eine Kraft und/oder ein Drehmoment, die von der zweiten Fahrzeugachse über den ersten Radsatz und das Leistungsverzweigungsgetriebe und den dritten Radsatz auf die Vorgelegewelle V an die erste Bremse übertragen und die Vorgelegewelle kann mit der ersten Bremse in Bezug auf eine Übertragung der Drehbewegung und/oder der Kraft und/oder des Drehmoments gehemmt, insbesondere gehalten und/oder abgestützt werden. Beispielsweise kann die Vorgelegewelle mit der ersten Bremse gegen das Getriebegehäuse oder den Rahmen festgesetzt werden. Insbesondere können auch eine Drehbewegung und/oder eine Kraft und/oder ein Drehmoment, die von der zweiten Fahrzeugachse über den ersten Radsatz an das Leistungsverzweigungsgetriebe und weiter über die zweite Welle an die zweite Bremse übertragen werden. Dabei kann die zweite Welle mit der zweiten Bremse in Bezug auf eine Übertragung der Drehbewegung und/oder der Kraft und/oder des Drehmoments gehemmt, insbesondere gehalten und/oder abgestützt werden. Beispielsweise kann die zweite Welle mit der zweiten Bremse gegen das Getriebegehäuse oder den Rahmen festgesetzt werden. Im "Parkbremse" Betriebsmodus kann das Hauptantriebselement abgeschaltet oder vom Hauptgetriebe entkoppelt oder das Hauptgetriebe im Neutralgang sein. Das Fahrzeug kann also insbesondere stillstehen. Der Betriebsmodus "Parkbremse" kann mittels der Ein- und Ausgabeeinheit auswählbar sein. Vorteilhafterweise kann somit ein Betrieb des leistungsverzweigten Achsantriebs als Parkbremse erreicht werden.

Ein weiterer Betriebsmodus kann ein "Fahrzeugachsen-Bremse" Betriebsmodus sein. Dabei können das zweite Schaltelement und die erste und zweite Bremse derart betätigbar sein, dass der leistungsverzweigte Achsantrieb als eine Bremse realisierbar ist, insbesondere also das Fahrzeug mit dem leistungsverzweigten Achsantrieb abbremsbar ist. Im "Fahrzeugachsen-Bremse" Betriebsmodus werden das zweite Schaltelement betätigt, insbesondere geschlossen, und die erste und zweite Bremse zumindest teilweise oder vollständig betätigt, insbesondere zumindest teilweise oder vollständig geschlossen. Die erste und zweite Bremse können also einen Schlupf aufweisen und/oder schleifen. Insbesondere kann mit der ersten Bremse die Drehzahl der Vorgelegewelle und mit der zweiten Bremse die Drehzahl der zweiten Welle reduziert werden oder sogar die Vorgelegewelle und/oder die zweite Welle bis zum Stillstand gehalten werden. Dadurch kann ein Leistungsfluss, also eine Drehbewegung und/oder eine Kraft und/oder ein Drehmoment, von der ersten Fahrzeugachse zumindest teilweise an die zweite Bremse und/oder von der ersten Fahrzeugachse über das Leistungsverzweigungsgetriebe zumindest teilweise an die dritte Welle und weiter an eine Hinterachsbremse und/oder von der ersten Fahrzeugachse zumindest teilweise über das Leistungsverzweigungsgetriebe an die erste Bremse übertragen werden und das Fahrzeug gebremst werden. Im Speziellen können mindestens 10%, bevorzugt mindestens 20%, besonders bevorzugt mindestens 25% des Leistungsflusses der ersten Fahrzeugachse an die zweite Bremse übertragen werden. Im "Fahrzeugachsen-Bremse" Betriebsmodus kann das Hauptantriebselement angeschaltet, also in Betrieb sein, sich insbesondere also das Fahrzeug bewegen. Vorteilhafterweise kann somit ein Betrieb des leistungsverzweigten Achsantriebs als Bremse erreicht werden.

In Ausgestaltung der Erfindung ist dem leistungsverzweigten Achsantrieb zumindest eine Steuerungsvorrichtung zugeordnet, insbesondere kann der leistungsverzweigte Achsantrieb die Steuerungsvorrichtung umfassen. Die Steuerungsvorrichtung kann, bevorzugt über eine oder mehrere Steuerleitungen, besonders bevorzugt über eine oder mehrere bidirektionale Steuerleitungen, mit dem ersten und/oder zweiten Zusatzantriebselement und/oder dem Nebenabtrieb und/oder dem Speicherelement und/oder dem ersten und/oder zweiten und/oder dritten und/oder vierten Schaltelement, insbesondere deren Aktuatoren, und/oder dem Hauptantriebselement und/oder dem Hauptgetriebe und/oder dem Leistungsverzweigungsgetriebe und/oder einer ersten und/oder zweiten Bremse, insbesondere deren Aktuatoren, zur Steuerung und/oder Regelung und/oder deren Ansteuerung verbunden sein, insbesondere mit diesen signalverbunden und/oder signalübertragend und/oder datenleitend verbunden sein.

In Ausgestaltung der Erfindung ist die Steuerungsvorrichtung zur Ansteuerung des leistungsverzweigte Achsantrieb, insbesondere der ersten und/oder zweiten Bremse, insbesondere deren Aktuatoren, und/oder des ersten und/oder zweiten und/oder eines dritten und/oder vierten Schaltelements, insbesondere deren Aktuatoren, und/oder des Leistungsverzweigungsgetriebes und/oder dem ersten und/oder zweiten Zusatzantriebselement und/oder dem Hauptantriebselement und/oder dem Hauptgetriebe, in Abhängigkeit von einem Betriebsmodus des leistungsverzweigten Achsantriebs und/oder Fahrzeugs eingerichtet und/oder ausgebildet. Dabei können mehrere unterschiedliche Betriebsmodi, insbesondere die oben genannten Betriebsmodi, vorgesehen sein, die insbesondere auswählbar und der zumindest einen Steuerungsvorrichtung zur Ansteuerung der leistungsverzweigten Achsantriebs vorgebbar sind. Mit anderen Worten, die Steuerungsvorrichtung ist derart ausgebildet, dass der leistungsverzweigte Achsantrieb, insbesondere die oben genannten Bauteile des leistungsverzweigten Achsantriebs, in Abhängigkeit von einem Betriebsmodus des leistungsverzweigten Achsantrieb und/oder des Fahrzeugs ansteuerbar sind. Insbesondere die oben genannten Betriebsmodi "Generator" und/oder "Vorlauf" und/oder "Voll-Elektrisch" und/oder "Parkbremse" und/oder "Fahrzeugachsen-Bremse" und/oder sowohl der generatorische, als auch der motorische Betrieb des ersten und zweiten Zusatzantriebselements können vorteilhafterweise mit der Steuerungsvorrichtung ansteuerbar sein.

In Ausgestaltung der Erfindung ist zwischen dem Hauptantriebselement und dem zweiten Zusatzantriebselement und/oder dem Hauptantriebselement und dem Hauptgetriebe ein drittes Schaltelement angeordnet, und/oder zwischen dem Hauptgetriebe und dem Hauptantriebselement und/oder dem Hauptgetriebe und dem zweiten Zusatzantriebselement ein viertes Schaltelement angeordnet. Das dritte und vierte Schaltelement können auf oder an der ersten Welle angeordnet sein. Das Hauptantriebselement kann über das dritte oder mit dem dritten Schaltelement mit dem zweiten Zusatzantriebselement und/oder dem Hauptgetriebe verbindbar, bevorzugt lösbar verbindbar, besonders bevorzugt lösbar drehfest und/oder lösbar antreibbar verbindbar sein. Das dritte Schaltelement ist bevorzugt eine dritte Kupplung. Mit anderen Worten, das dritte Schaltelement kann also auf einer Seite über einen Teil der ersten Welle mit dem Hauptantriebselement verbunden sein und auf einer anderen Seite über einen anderen Teil der ersten Welle mit dem Hauptgetriebe und/oder, insbesondere über die Übersetzungsstufe, insbesondere den vierten Radsatz, mit dem zweiten Zusatzantriebselement verbunden sein. In der gerade beschriebenen Anordnung ist somit eine selektive Trennung beziehungsweise Verbindung des Hauptantriebselements zu dem leistungsverzweigten Achsantrieb herstellbar. Bei geöffnetem drittem Schaltelement kann somit weder von dem Hauptantriebselement eine Drehbewegung und/oder eine Kraft und/oder ein Drehmoment in den leistungsverzweigten Achsantrieb eingeleitet werden, noch umgekehrt aus dem leistungsverzweigten Achsantrieb in das Hauptantriebselement eingeleitet werden. Das Hauptantriebselement ist somit bei geöffnetem dritten Schaltelement rotatorisch von dem leistungsverzweigten Achsantrieb getrennt. Das dritte Schaltelement kann betätigbar, bevorzugt selektiv betätigbar, besonders bevorzugt schliessbar und öffenbar und/oder einrückbar und/oder schaltbar und/oder selektiv eingreifbar sein. Mit betätigtem, insbesondere geschlossenem, drittem Schaltelement kann also eine Drehbewegung und/oder eine Kraft und/oder ein Drehmoment vom Hauptantriebselement an das das Hauptgetriebe und/oder, insbesondere über die Übersetzungsstufe, an das zweite Zusatzantriebselement und/oder umgekehrt übertragbar sein. Dadurch kann somit bei geschlossenem drittem Schaltelement im Fahr- und/oder Schubbetrieb bei generatorischem Betrieb des ersten und/oder zweiten Zusatzantriebselements Bremsenergie in elektrische Energie umgewandelt und in dem Speicherelement gespeichert werden. Mit nicht betätigtem, insbesondere geöffnetem, drittem Schaltelement, kann also keine Drehbewegung und/oder keine Kraft und/oder kein Drehmoment vom Hauptantriebselement an das das Hauptgetriebe und/oder, insbesondere über die Übersetzungsstufe, an das zweite Zusatzantriebselement und/oder umgekehrt übertragbar sein. Bei nicht betätigtem drittem Schaltelement kann somit lediglich ein rein elektrischer Fahrzustand durch das motorische Betreiben des ersten Zusatzantriebselements und/oder des zweiten Zusatzantriebselements realisierbar sein. Das Hauptgetriebe kann über das vierte oder mit dem vierten Schaltelement mit dem zweiten Zusatzantriebselement und/oder dem Hauptantriebselement verbindbar, bevorzugt lösbar verbindbar, besonders bevorzugt lösbar drehfest und/oder lösbar antreibbar verbindbar sein. Das vierte Schaltelement kann bevorzugt eine vierte Kupplung sein. Mit anderen Worten, das vierte Schaltelement kann also auf einer Seite über einen Teil der ersten Welle mit dem Hauptgetriebe verbunden sein und auf einer anderen Seite über einen anderen Teil der ersten Welle, insbesondere über die Übersetzungsstufe, mit dem zweiten Zusatzantriebselement und/oder dem Hauptantriebselement verbunden sein. Das vierte Schaltelement kann dabei direkt benachbart zum Hauptgetriebe auf der ersten Welle angeordnet sein. Das vierte Schaltelement kann betätigbar, bevorzugt selektiv betätigbar, besonders bevorzugt schliessbar und öffenbar und/oder einrückbar und/oder schaltbar und/oder selektiv eingreifbar sein. Mit betätigtem, insbesondere geschlossenem, viertem Schaltelement kann also eine Drehbewegung und/oder eine Kraft und/oder ein Drehmoment vom Hauptgetriebe in oder an den leistungsverzweigten Achsantrieb und/oder umgekehrt eingeleitet oder übertragen werden. Mit nicht betätigtem, insbesondere geöffnetem, drittem Schaltelement, kann also keine Drehbewegung und/oder keine Kraft und/oder kein Drehmoment vom Hauptgetriebe in oder an den leistungsverzweigten Achsantrieb und/oder umgekehrt eingeleitet oder übertragen werden. Bei geöffnetem viertem Schaltelement ist also das Hauptgetriebe vom Hauptantriebselement und/oder dem zweite Zusatzantriebselement entkoppelt. Mit anderen Worten, bei geöffnetem viertem Schaltelement kann somit das Hauptgetriebe rotatorisch vom Hauptantriebselement und/oder vom zweiten Zusatzantriebselement getrennt sein. Dies bedeutet, dass ein mechanisch eingeleiteter Vortrieb über das Hauptgetriebe nicht darstellbar ist. In einer alternativen Ausführungsform kann das vierte Schaltelement anstatt zwischen dem Hauptgetriebe und dem Hauptantriebselement beziehungsweise dem Hauptgetriebe und dem zweiten Zusatzantriebselement auch auf der Seite des Getriebeausgangs des Hauptgetriebes angeordnet sein. Bei geöffnetem drittem Schaltelement ist in diesem Fall dann nicht der Getriebeeingang, sondern der Getriebeausgang des Hauptgetriebes rotatorisch von dem Hauptantriebselement beziehungsweise dem zweiten Zusatzantriebselement getrennt, was funktional gleichbedeutend mit der zuvor beschriebenen Anordnung identisch ist. Im Speziellen können das dritte und/oder vierte Schaltelement auch im Hauptgetriebe angeordnet sein.

Alternativ dazu ist auch eine Anordnung ohne ein drittes und viertes Schaltelement denkbar, jedoch muss sich dabei das Hauptgetriebe in einer Neutralstellung befinden, um funktional den gleichen Effekt zu erzielen, wie ein geöffnetes viertes Schaltelement. Unter einer Neutralstellung des Hauptgetriebes ist dabei zu verstehen, dass zwischen Getriebeeingang und Getriebeausgang des Hauptgetriebes kein Kraftschluss vorliegt. Eine Drehbewegung des Getriebeeingangs wird somit nicht auf den Getriebeausgang übertragen. Darüber hinaus kann bei ausgeschaltetem Hauptantriebselement und geöffnetem vierten Schaltelement und geschlossenem dritten Schaltelement das Hauptantriebselement durch motorischen Betrieb des zweiten Zusatzantriebselements gestartet werden.

Die Erfindung betrifft weiter ein landwirtschaftliches Fahrzeug, insbesondere einen Traktor oder Schlepper, umfassend einen leistungsverzweigten Achsantrieb, insbesondere einen leistungsverzweigten Achsantrieb nach mindestens einem der Ansprüche 1 bis 10. Das erfindungsgemässe landwirtschaftliche Fahrzeug weist die oben beschriebenen Vorteile des erfindungsgemässen leistungsverzweigten Achsantriebs auf. Darüber hinaus zeichnet sich das landwirtschaftliche Fahrzeug durch eine verbesserte Manövrierbarkeit aufgrund kleinerer Wenderadien aus, was insbesondere bei Feldfahrten im Vorgewende vorteilhaft ist. Die Lenkunterstützung trägt auch zu einer Komforterhöhung bei.

In Ausgestaltung der Erfindung ist der leistungsverzweigte Achsantrieb zum Antreiben des Fahrzeugs, insbesondere wahlweisen Antreiben der ersten und/oder zweiten Fahrzeugachse ausgebildet. Im Speziellen ist mit einer Drehbewegung und/oder Kraft und/oder einem Drehmoment des Hauptantriebselements wenigstens die zweite Fahrzeugachse über das Hauptgetriebe antreibbar. Die erste Fahrzeugachse kann dabei eine lenkbare Vorderachse und/oder die zweite Fahrzeugachse eine Hinterachse sein.

In Ausgestaltung der Erfindung ist die Steuerungsvorrichtung zur Bestimmung von unterschiedlichen Betriebsmodi des landwirtschaftlichen Fahrzeugs, insbesondere des leistungsverzweigten Achsantriebs eingerichtet. Denkbar ist dabei, dass fahrsituationsabhängig ein Betriebsmodus von einer Bedienperson des landwirtschaftlichen Fahrzeugs auswählbar ist und/oder der Steuerungsvorrichtung vorgegeben wird. Zusätzlich oder alternativ kann in Abhängigkeit von der Betätigung einer der Aktuatoren und/oder Bauteile des leistungsverzweigten Achsantriebs ein Betriebsmodus bestimmt werden.

Die Erfindung betrifft weiter ein Verfahren zum Betreiben eines leistungsverzweigten Achsantriebs, insbesondere eines leistungsverzweigten Achsantriebs nach einem der Ansprüche 1 bis 10. Der leistungsverzweigte Achsantrieb kann ein erstes Zusatzantriebselement, eine erste Fahrzeugachse, eine zweite Fahrzeugachse und ein Hauptantriebselement zur Bereitstellung eines Drehmoments umfassen, welches mit einer ersten Welle auf ein Hauptgetriebe übertragen wird. Das Hauptgetriebe ist mit der zweiten Fahrzeugachse verbunden und mit dem Drehmoment des Hauptantriebselements wird wenigstens die zweite Fahrzeugachse über das Hauptgetriebe angetrieben. Der leistungsverzweigte Achsantrieb weist weiter ein Leistungsverzweigungsgetriebe auf, wobei das Leistungsverzweigungsgetriebe über einen ersten Radsatz mit der zweiten Fahrzeugachse und dem Hauptgetriebe verbunden ist und über eine zweite Welle mit der ersten Fahrzeugachse verbunden ist.

Das erste Zusatzantriebselement wird zur Einleitung eines Drehmoments über ein erstes Schaltelement mit dem Leistungsverzweigungsgetriebe verbunden. Mit anderen Worten, das Verfahren umfasst einen Schritt des Einwirkens des ersten Zusatzantriebselements auf das Leistungsverzweigungsgetriebe, wobei von dem ersten Zusatzantriebselement eine Drehbewegung und/oder eine Kraft und/oder ein Drehmoment in das Leistungsverzweigungsgetriebe eingeleitet wird, wodurch eine durch ein Hauptgetriebe, und/oder insbesondere die zweite Fahrzeugachse, eingeleitete Drehbewegung beziehungsweise ein eingeleitetes Drehmoment derart überlagert wird, dass ein Vorlauf der zweiten Fahrzeugachse verändert wird. Das erfindungsgemässe Verfahren weist die oben beschriebenen Vorteile des erfindungsgemässen leistungsverzweigten Achsantriebs auf.

In Ausgestaltung der Erfindung umfasst das Verfahren einen Schritt des Regelns eines Vorlaufs der ersten Fahrzeugachse in Abhängigkeit eines Lenkwinkels einer der Fahrzeugachsen, insbesondere der ersten Fahrzeugachse oder der ersten und zweiten Fahrzeugachse zueinander. Dabei kann der Vorlauf bedarfsgerecht, wie eingangs beschrieben, erhöht oder verringert werden.

Der erfindungsgemässe leistungsverzweigte Achsantrieb und/oder das erfindungsgemässe landwirtschaftliche Fahrzeug können ausserdem die Steuerungsvorrichtung umfassen. Ebenso kann das erfindungsgemässe Verfahren mit der Steuerungsvorrichtung ausführbar sein. Die Steuerungsvorrichtung kann ein elektronisches Modul und/oder ein eingebettetes System sein und/oder ein Speichermodul und/oder einen Prozessor umfassen. Die Steuerungsvorrichtung kann mit dem ersten und/oder zweiten Zusatzantriebselement und/oder dem Nebenabtrieb und/oder dem Speicherelement und/oder dem ersten und/oder zweiten und/oder dritten und/oder vierten Schaltelement und/oder dem Hauptantriebselement und/oder dem Hauptgetriebe und/oder dem Leistungsverzweigungsgetriebe und/oder der ersten und/oder zweiten Bremse verbunden sein, bevorzugt signalverbunden und/oder signalübertragend und/oder datenleitend verbunden sein. Unter einer signalverbundenen und/oder signalübertragenden und/oder datenleitenden Verbindung ist dabei zu verstehen, dass ein Austausch von Signalen zwischen den verbundenen Bauteilen stattfindet. Die Signale werden in der Steuerungsvorrichtung verarbeitet und dienen somit zur Steuerung und/oder Regelung und Ansteuerung der signalverbundenen und/oder signalübertragend und/oder datenleitend miteinander verbundenen Bauteile. Die Verbindung kann kabelgebunden, insbesondere also mit Kabel, und/oder kabellos, also per Funk, beispielsweise mit Bluetooth realisiert sein. Der Kommunikationsbus kann beispielsweise Isobus, CAN-Bus oder ähnliches sein kann. Ausserdem kann mit der Steuerungsvorrichtung eine weitere Steuerungsvorrichtung steuerbar und/oder regelbar sein. Die weitere Steuerungsvorrichtung (engl. ECU = electronic control unit oder ECM = electronic control module) kann wie die Steuerungsvorrichtung ausgebildet sein. Die Steuerungsvorrichtung kann dem Fahrzeug zugeordnet, insbesondere am Fahrzeug angeordnet sein oder dem leistungsverzweigten Achsantrieb zugeordnet sein oder der leistungsverzweigte Achsantrieb kann die Steuerungsvorrichtung umfassen. Die Steuerungsvorrichtung kann auch zweiteilig beispielsweise als Teil des Fahrzeugs und als Teil des leistungsverzweigten Achsantriebs ausgebildet sein. Ausserdem können das Hauptantriebselement zur Bereitstellung eines Drehmoments und/oder das Hauptgetriebe und/oder das Leistungsverzweigungsgetriebe und/oder das erste und/oder zweite Zusatzantriebselement und/oder der Nebenabtrieb und/oder das Speicherelement und/oder das erste und/oder zweite und/oder dritte und/oder vierte Schaltelement und/oder die erste und/oder zweite Bremse mit der Steuerungsvorrichtung einstellbar und/oder verstellbar sein, und/oder bevorzugt steuerbar und/oder regelbar sein. Die Steuerungsvorrichtung kann unmittelbar mit der in einer Kabine des Fahrzeugs angeordneten Ein- und Ausgabeeinheit Verbindung stehen, durch welche von einer Bedienperson eingegebene Daten an die Steuerungsvorrichtung übertragen oder von dieser empfangen und ausgegeben werden können. Denkbar ist aber auch, dass die Steuerungsvorrichtung mittelbar durch eine übergeordnete Steuerungseinheit mit der Ein- und Ausgabeeinheit verbunden ist.

Der leistungsverzweigte Achsantrieb kann einen ersten Aktuator und/oder einen zweiten Aktuator und/oder einen dritten Aktuator und/oder einen vierten Aktuator und/oder einen fünften Aktuator und/oder einen sechsten Aktuator umfassen. Dem ersten Schaltelement kann der erste Aktuator und/oder dem zweiten Schaltelement kann der zweite Aktuator und/oder dem dritten Schaltelement kann der dritte Aktuator und/oder dem vierten Schaltelement kann der vierte Aktuator und/oder der ersten Bremse der fünfte Aktuator und/oder der zweiten Bremse der sechste Aktuator zugeordnet sein. Der erste und/oder zweite und/oder dritte und/oder vierte und/oder fünfte und/oder sechste Aktuator können mit der Steuerungsvorrichtung verbunden sein, bevorzugt signalverbunden und/oder signalübertragend und/oder datenleitend verbunden sein. Der erste und/oder zweite und/oder dritte und/oder vierte und/oder fünfte und/oder sechste Aktuator können mit der Steuerungsvorrichtung betätigbar, insbesondere schliessbar sein.

Im Folgenden werden die Erfindung sowie weitere Vorteile und vorteilhafte Weiterbildungen und Ausgestaltungen der Erfindung sowohl in apparativer als auch in verfahrenstechnischer Hinsicht anhand von Ausführungsbeispielen und unter Bezugnahme auf die Zeichnung näher erläutert. Dabei sind hinsichtlich ihrer Funktion übereinstimmende bzw. vergleichbare Bauteile mit denselben Bezugszeichen gekennzeichnet. In den schematischen Zeichnungen zeigen:

Fig. 1 eine schematische Darstellung eines ersten Ausführungsbeispiels eines erfindungsgemässen landwirtschaftlichen Fahrzeugs mit einem ersten Ausführungsbeispiel eines erfindungsgemässen leistungsverzweigten Achsantriebs, und

Fig. 2 eine schematische Darstellung des ersten Ausführungsbeispiels eines nicht erfindungsgemässen leistungsverzweigten Achsantriebs, und

Fig. 3 eine schematische Darstellung eines zweiten Ausführungsbeispiels eines nicht erfindungsgemässen leistungsverzweigten Achsantriebs, und

Fig. 4 eine schematische Darstellung eines dritten Ausführungsbeispiels eines nicht erfindungsgemässen leistungsverzweigten Achsantriebs, und

Fig. 5 eine schematische Darstellung eines vierten Ausführungsbeispiels des erfindungsgemässen leistungsverzweigten Achsantriebs, und

Fig. 6 eine schematische Darstellung eines fünften Ausführungsbeispiels des erfindungsgemässen leistungsverzweigten Achsantriebs, und

Fig. 7 eine schematische Darstellung eines sechsten Ausführungsbeispiels des erfindungsgemässen leistungsverzweigten Achsantriebs, und

Fig. 8 eine schematische Darstellung eines siebten Ausführungsbeispiels des erfindungsgemässen leistungsverzweigten Achsantriebs, und

Fig. 9 eine schematische Darstellung eines achten Ausführungsbeispiels des erfindungsgemässen leistungsverzweigten Achsantriebs, und

Fig. 10 eine detaillierte schematische Darstellung eines neunten Ausführungsbeispiels eines nicht erfindungsgemässen leistungsverzweigten Achsantriebs, und

Fig. 11 eine detaillierte schematische Darstellung eines zehnten Ausführungsbeispiels des erfindungsgemässen leistungsverzweigten Achsantriebs, und

Fig. 12 eine detaillierte schematische Darstellung eines elften Ausführungsbeispiels des erfindungsgemässen leistungsverzweigten Achsantriebs, und

Fig. 13 eine schematische Darstellung des Leistungsflusses im "Voll-Elektrisch" Betriebsmodus des erfindungsgemässen leistungsverzweigten Achsantriebs, und

Fig. 14 eine schematische Darstellung des Leistungsflusses im "Parkbremse" Betriebsmodus des erfindungsgemässen leistungsverzweigten Achsantriebs, und

Fig. 15 eine schematische Darstellung des Leistungsflusses im "Fahrzeugachsen-Bremse" Betriebsmodus des erfindungsgemässen leistungsverzweigten Achsantriebs, und

Fig. 16 eine detaillierte schematische Darstellung eines zwölften Ausführungsbeispiels eines nicht erfindungsgemässen leistungsverzweigten Achsantriebs.

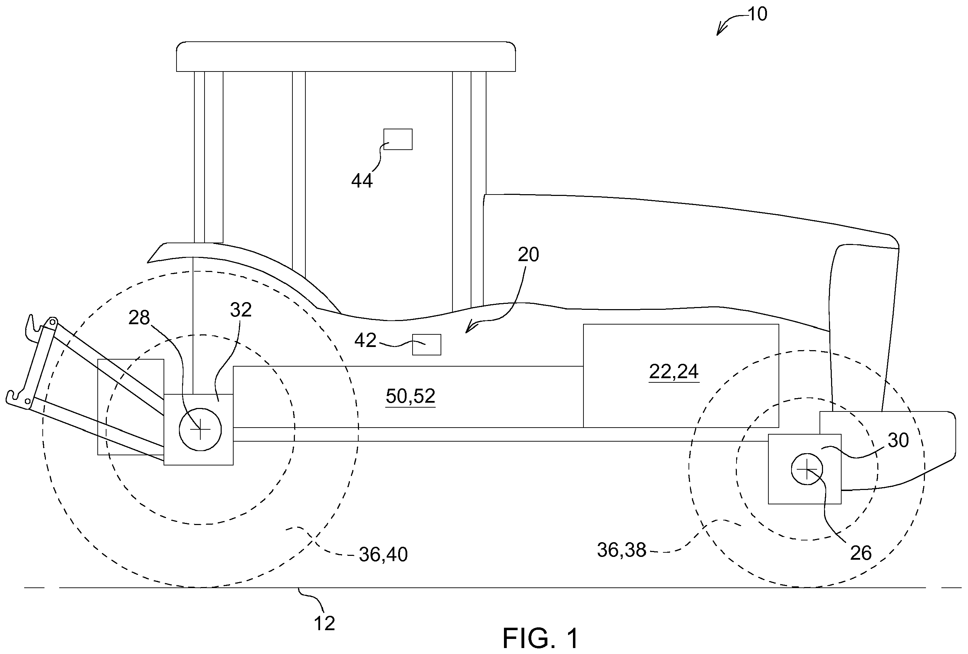

Figur 1 zeigt eine schematische Darstellung eines ersten Ausführungsbeispiels eines erfindungsgemässen landwirtschaftlichen Fahrzeugs 10, hier insbesondere eines Traktors oder Schleppers, mit einem ersten Ausführungsbeispiel eines erfindungsgemässen leistungsverzweigten Achsantrieb 20. Das landwirtschaftliche Fahrzeug 10 umfasst den leistungsverzweigten Achsantrieb 20. Der leistungsverzweigte Achsantrieb 20 umfasst ein Hauptantriebselement 22, ein Hauptgetriebe 24, eine erste Fahrzeugachse 26 und eine zweite Fahrzeugachse 28. Das Hauptantriebselement 22 kann als Verbrennungskraftmaschine oder Elektromotor ausgeführt sein kann, insbesondere als ein Verbrennungsmotor ausgeführt sein. Die erste Fahrzeugachse 26 kann eine Vorderachse und die zweite Fahrzeugachse 28 eine Hinterachse sein. Ausserdem kann die erste Fahrzeugachse 26 als lenkbare Achse ausgeführt sein. Der leistungsverzweigte Achsantrieb 20 kann ausserdem ein erstes Differential 30, also insbesondere ein Vorderachsdifferential, umfassen. Die erste Fahrzeugachse 26 kann mit dem ersten Differential 30 verbunden sein, insbesondere antreibbar verbunden sein. Der leistungsverzweigte Achsantrieb 20 kann ausserdem ein zweites Differential 32, also insbesondere ein Hinterachsdifferential, umfassen. Die zweite Fahrzeugachse 28 kann mit dem zweiten Differential 32 verbunden sein, insbesondere antreibbar verbunden sein.

Mit dem Hauptgetriebe 24 kann eine Drehbewegung und/oder Kraft und/oder ein Drehmoment des Hauptantriebselements 22 mit unterschiedlichen Gangstufen auf die erste und/oder zweite Fahrzeugachse 26, 28 übertragbar sein. Die erste und/oder zweite Fahrzeugachse 26, 28 wandeln eine Drehbewegung und/oder Kraft und/oder ein Drehmoment des Hauptantriebselements 22 in eine Drehbewegung und/oder Kraft und/oder ein Drehmoment eines oder mehrerer Bodeneingriffsmittel 36 und somit in einen Vorschub des Fahrzeugs 10 um. Das Fahrzeug 10 kann eines oder mehrere Bodeneingriffsmittel 36, hier in Form von Rädern 38, 40 dargestellt, aufweisen, welche mit einem Untergrund 12 zur Übertragung von Antriebskräften in Eingriff stehen und/oder durch die sich das Fahrzeug 10 auf dem Untergrund 12 abstützt. Das Fahrzeug 10 kann ausserdem ein Fahrgestell (nicht dargestellt) aufweisen, wobei das Fahrgestell insbesondere von den an der ersten und/oder zweiten Fahrzeugachse 28, 30 aufgehängten Rädern 38, 40 getragen werden kann. Im Speziellen sind ein erstes Paar Räder 38 an der ersten Fahrzeugachse 26 und ein zweites Paar Räder 40 an der zweiten Fahrzeugachse 28 angeordnet sein. Dabei können die Durchmesser der Rädern 38, 40 voneinander abweichen, insbesondere kann der Durchmesser des ersten Paars Räder 38 kleiner als der Durchmesser des zweiten Paars Rädern 40 sein. Alternativ können die Bodeneingriffsmittel 36 auch als Raupen ausgebildet und angeordnet sein.

Der leistungsverzweigte Achsantrieb 20 und/oder das Fahrzeug 10 können ausserdem eine Steuerungsvorrichtung 42 umfassen. Die Steuerungsvorrichtung 42 kann unmittelbar mit einer in einer Kabine des Fahrzeugs angeordneten Ein- und Ausgabeeinheit 44 Verbindung stehen, durch welche von einer Bedienperson eingegebene Daten an die Steuerungsvorrichtung 42 übertragen oder von dieser empfangen und ausgeben werden können.

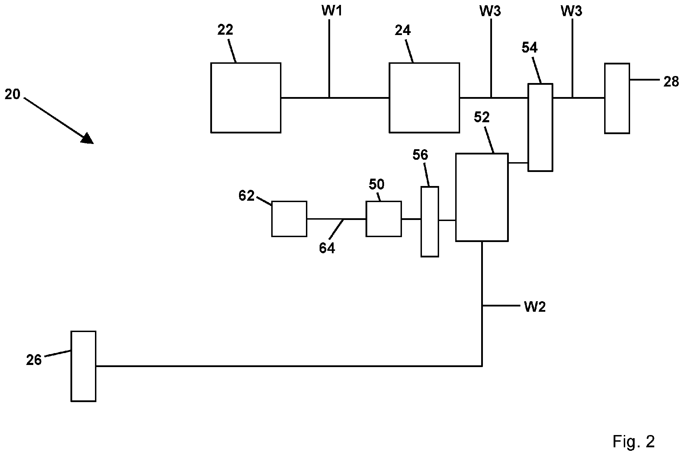

Figur 2 zeigt eine schematische Darstellung eines ersten Ausführungsbeispiels eines nicht erfindungsgemässen leistungsverzweigten Achsantriebs 20. Der in Figur 2 gezeigte Achsantrieb 20 entspricht im Wesentlichen dem in Figur 1 gezeigten leistungsverzweigten Achsantrieb 20, sodass im Folgenden lediglich auf Details und/oder Unterschiede eingegangen wird. Das landwirtschaftliche Fahrzeug 10 kann den leistungsverzweigten Achsantrieb 20, wie in Figur 2 dargestellt, umfassen. Der leistungsverzweigte Achsantrieb 20 für ein landwirtschaftliches Fahrzeug 10 umfasst ein erstes Zusatzantriebselement 50, die erste Fahrzeugachse 26, die zweite Fahrzeugachse 28 und das Hauptantriebselement 22 zur Bereitstellung einer Drehbewegung und/oder einer Kraft und/oder eines Drehmoments, welches mit einer ersten Welle W1 auf das Hauptgetriebe 24 übertragbar ist. Das Hauptgetriebe 24 ist also über die oder mit der ersten Welle W1 mit dem Hauptantriebselement 22 verbunden, insbesondere antreibbar verbunden. Die zweiten Fahrzeugachse 28 ist mit dem Hauptgetriebe 24 verbunden, insbesondere antreibbar verbunden. Dabei ist die zweite Fahrzeugachse 28 mit der Drehbewegung und/oder der Kraft und/oder dem Drehmoment des Hauptantriebselements 22 wenigstens über das Hauptgetriebe 24 antreibbar. Im Speziellen ist die zweiten Fahrzeugachse 28 über eine oder mit einer dritte Welle W3 mit dem Hauptgetriebe 24 verbunden, insbesondere antreibbar verbunden. Mit anderen Worten, durch das Hauptantriebselement 22 ist also eine Drehbewegung und/oder eine Kraft und/oder ein Drehmoment erzeugbar, welches über die erste Welle W1 in das Hauptgetriebe 24 und vom Hauptgetriebe 24 in die oder an die zweite Fahrzeugachse 28 einleitbar oder übertragbar ist. Der leistungsverzweigte Achsantrieb 20 umfasst weiter ein Leistungsverzweigungsgetriebe 52. Das Leistungsverzweigungsgetriebe 52 ist über einen oder mit einem ersten Radsatz 54 mit der dritten Welle W3 verbunden, insbesondere antreibbar verbunden. Mit dem ersten Radsatz 54 kann also eine Drehbewegung und/oder ein Drehmoment vom Hauptantriebselement 22 an das Hauptgetriebe 24 an die dritte Welle W3 an oder in das Leistungsverzweigungsgetriebe 52 übertragen oder eingeleitet werden. Ausserdem ist die erste Fahrzeugachse 26 über eine oder mit einer zweiten Welle W2 mit dem das Leistungsverzweigungsgetriebe 52 verbunden, insbesondere antreibbar verbunden.

Das erste Zusatzantriebselement 50 ist über ein erstes oder mit einem ersten Schaltelement 56 mit dem Leistungsverzweigungsgetriebe 52 verbindbar, bevorzugt lösbar verbindbar, besonders bevorzugt lösbar drehfest und/oder lösbar antreibbar verbindbar. Im Folgenden ist unter einem nicht betätigten ersten Schaltelement 56 ein geöffnetes erstes Schaltelement 56 zu verstehen. Das bedeutet, dass keine Drehbewegung und/oder keine Kraft und/oder kein Drehmoment des ersten Zusatzantriebselements 50 mit dem oder über das erste Schaltelement 56 an oder in das Leistungsverzweigungsgetriebe 52 und/oder umgekehrt übertragbar oder einleitbar ist. Bei betätigtem, insbesondere geschlossenem ersten Schaltelement 56, kann eine Drehbewegung und/oder eine Kraft und/oder ein Drehmoment des ersten Zusatzantriebselements 50 mit dem oder über das erste Schaltelement 56 an oder in das Leistungsverzweigungsgetriebe 52 übertragbar oder einleitbar ist, und/oder umgekehrt vom Leistungsverzweigungsgetriebe 52 in das erste Zusatzantriebselements übertragbar sein. Darüber hinaus kann das erste Zusatzantriebselement 50 generatorisch oder motorisch betrieben werden.

Der leistungsverzweigte Achsantrieb 20 kann auch ein Speicherelement 62 umfassen. Das Speicherelement 62 ist dabei optional vorgesehen. Das erste Zusatzantriebselement 50 kann über eine Verbindungsleitung 64 mit dem Speicherelement 62 leistungselektronisch verbunden sein. Mit dem leistungsverzweigten Achsantrieb, insbesondere auch dem Fahrzeug, können einer oder mehrere Betriebsmodi realisiert werden.

In einem Fahrbetrieb oder Schubbetrieb des Fahrzeugs 10 und/oder des leistungsverzweigten Achsantriebs 20 erzeugt das Hauptantriebselement 22 eine Drehbewegung und/oder eine Kraft und/oder ein Drehmoment, welche durch die erste Welle W1 in das Hauptgetriebe 24 eingeleitet wird. Die in das Hauptgetriebe 24 eingeleitete Drehbewegung und/oder eine Kraft und/oder ein Drehmoment erfährt in dem Hauptgetriebe 24 eine Übersetzung, soweit eine Gangstufe beziehungsweise eine Fahrstufe eingelegt ist. Der Ort, an dem eine Drehbewegung und/oder eine Kraft und/oder ein Drehmoment in das Hauptgetriebe 24 eingeleitet wird, wird als Getriebeeingang eingezeichnet, wobei der Ort, an dem unter Berücksichtigung des Übersetzungsverhältnisses eine resultierende Drehbewegung und/oder eine resultierende Kraft und/oder ein resultierendes Drehmoment anliegt, wird als Getriebeausgang bezeichnet. In dem in Fig. 2 gezeigten Beispiel sind Getriebeeingang und Getriebeausgang des Hauptgetriebes 24 einander gegenüberliegend angeordnet. Die bei eingelegter Gangstufe beziehungsweise Fahrstufe vorliegende Drehbewegung und/oder die vorliegende Kraft und/oder das vorliegende Drehmoment am Getriebeausgang des Hauptgetriebes 24 wird über die dritte Welle W3 in die zweite Fahrzeugachse 28 eingeleitet. Darüber hinaus wird die Drehbewegung und/oder die Kraft und/oder das Drehmoment des Hauptantriebselements 22 über das Hauptgetriebe 24 von der zweiten Welle W2 über den ersten Radsatz 54 in das Leistungsverzweigungsgetriebe 52 eingeleitet oder übertragen.

Im "Generator" Betriebsmodus kann zum Laden des Speicherelements 62 das erste Zusatzantriebselement 50, insbesondere im Fahr- oder Schubbetrieb, generatorisch betrieben werden. Im generatorischen Betrieb des ersten Zusatzantriebselements 50 wird, insbesondere mit betätigtem, insbesondere geschlossenem, erstem Schaltelement 56, die vom Hauptantriebselement 22 in das Leistungsverzweigungsgetriebe 52 eingeleitet Drehbewegung und/oder Kraft und/oder das Drehmoment in oder an das erste Zusatzantriebselement 50 eingeleitet oder übertragen und mit dem ersten Zusatzantriebselement elektrische Energie erzeugt und Speicherelement 62 zugeführt.

Ebenso kann der "Vorlauf" Betriebsmodus realisiert werden, indem das erste Zusatzantriebselement 50 motorisch betrieben wird. Dadurch kann eine zusätzliche Drehbewegung und/oder eine zusätzliche Kraft und/oder ein zusätzliches Drehmoment des ersten Zusatzantriebselement 50 über das geschlossen erste Schaltelement 56 an das Leistungsverzweigungsgetriebe 52 übertragen werden. Die an das Leistungsverzweigungsgetriebe 52 übertragene Drehbewegung und/oder Kraft und/oder das übertragene Drehmoment des Hauptantriebselements 22 und die an das Leistungsverzweigungsgetriebe 52 übertragene Drehbewegung und/oder Kraft und/oder das übertragene Drehmoment des ersten Zusatzantriebselements 50 können mit dem Leistungsverzweigungsgetriebe 52 überlagert werden und eine resultierende Drehbewegung und/oder eine resultierende Kraft und/oder ein resultierendes Drehmoment auf die erste Fahrzeugachse 26 übertragbar sein. Vorteilhafterweise kann so ein Vorlauf der ersten Fahrzeugachse 26 einstellbar, insbesondere steuerbar und/oder regelbar sein. Das erste Zusatzantriebselement 50 wirkt also auf das Leistungsverzweigungsgetriebe 52 derart ein, dass das erste Zusatzantriebselement 50 eine Drehbewegung und/oder eine Kraft und/oder ein Drehmoment in das Leistungsverzweigungsgetriebe 52 einleitet, welche einer mit dem Hauptantriebselement 22 über das Hauptgetriebe in das Leistungsverzweigungsgetriebe 52 eingeleitete Drehbewegung und/oder Kraft und/oder einem eingeleiteten Drehmoment derart überlagert wird, dass ein Vorlauf der ersten Fahrzeugachse verändert wird.

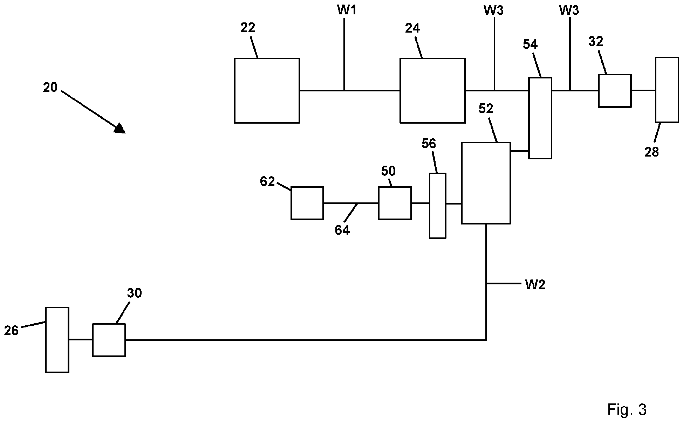

Figur 3 zeigt eine schematische detaillierte Darstellung eines zweiten Ausführungsbeispiels eines nicht erfindungsgemässen leistungsverzweigten Achsantriebs 20. Der in Figur 3 gezeigte Achsantrieb 20 entspricht im Wesentlichen dem in den Figuren 1 und 2 gezeigten leistungsverzweigten Achsantrieb 20, sodass im Folgenden lediglich auf Details und/oder Unterschiede eingegangen wird. Das landwirtschaftliche Fahrzeug 10 kann den leistungsverzweigten Achsantrieb 20, wie in Figur 3 dargestellt, umfassen. Der leistungsverzweigte Achsantrieb 20 umfasst ein erstes Differential 30, insbesondere ein Vorderachsdifferential. Das erste Differential 30 ist über die zweite oder mit der zweiten Welle W2 mit dem Leistungsverzweigungsgetriebe 52 verbunden, insbesondere antreibbar verbunden. Dadurch kann eine Drehbewegung und/oder eine Kraft und/oder ein Drehmoment des Leistungsverzweigungsgetriebes 52 mit oder über das erste Differential 30 in oder an die erste Fahrzeugachse 26 einleitbar oder übertragbar sein. Umgekehrt kann auch eine Drehbewegung und/oder eine Kraft und/oder ein Drehmoment der ersten Fahrzeugachse 26 mit oder über das erste Differential 30 in oder an das Leistungsverzweigungsgetriebe 52 einleitbar oder übertragbar sein. Der leistungsverzweigte Achsantrieb 20 umfasst ein zweites Differential 32, insbesondere ein Hinterachsdifferential. Das zweite Differential 32 ist über die dritte oder mit der dritten Welle W3 mit dem Hauptgetriebe 24 verbunden, insbesondere antreibbar verbunden. Dadurch kann eine Drehbewegung und/oder eine Kraft und/oder ein Drehmoment des Hauptgetriebes 24 mit oder über das zweite Differential 32 in oder an die zweite Fahrzeugachse 28 einleitbar oder übertragbar sein. Das erste und zweite Differential 30, 32 sind optional vorgesehen.

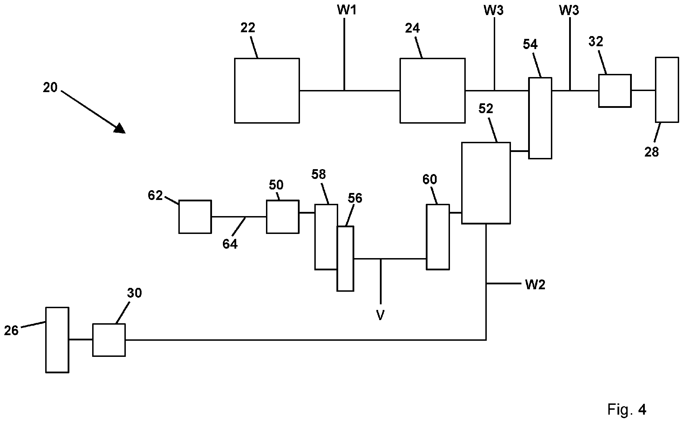

Figur 4 zeigt eine schematische detaillierte Darstellung eines dritten Ausführungsbeispiels eines nicht erfindungsgemässen leistungsverzweigten Achsantriebs 20. Der in Figur 4 gezeigte leistungsverzweigte Achsantrieb 20 entspricht im Wesentlichen dem in den Figuren 1 bis 3 gezeigten leistungsverzweigten Achsantrieb 20, sodass im Folgenden lediglich auf Details und/oder Unterschiede eingegangen wird. Das landwirtschaftliche Fahrzeug 10 kann den leistungsverzweigten Achsantrieb 20, wie in Figur 4 dargestellt, umfassen. Der leistungsverzweigte Achsantrieb 20 umfasst zusätzlich eine Vorgelegewelle V. Das erste Zusatzantriebselement 50 ist über das erste oder mit dem ersten Schaltelement 56 mit der Vorgelegewelle V verbindbar, bevorzugt antreibbar verbindbar. Ebenso ist das Leistungsverzweigungsgetriebe 52 mit der Vorgelegewelle V verbunden, insbesondere antreibbar verbunden. Ausserdem umfasst der leistungsverzweigte Achsantrieb 20 einen zweiten Radsatz 58. Das erste Schaltelement 56 ist dabei über den oder mit dem zweiten Radsatz 58 mit dem ersten Zusatzantriebselement 50 verbunden, bevorzugt antreibbar verbunden. Die Vorgelegewelle V ist mit dem ersten oder über das erste Schaltelement 56 mit dem zweiten Radsatz 58 verbindbar, bevorzugt antreibbar verbindbar. Das erste Schaltelement 56 ist dabei derart betätigbar, insbesondere schliessbar, dass der zweite Radsatz 58 über das erste oder mit dem ersten Schaltelement 56 mit der Vorgelegewelle V verbunden ist, bevorzugt antreibbar verbunden ist. Mit anderen Worten, das erste Schaltelement 56 ist derart betätigbar, insbesondere schliessbar, dass eine Drehbewegung und/oder eine Kraft und/oder ein Drehmoment des ersten Zusatzantriebselements 50 an oder in den zweiten Radsatz 58 und vom zweiten Radsatz 58 an oder in das erste Schaltelement 56 und vom ersten Schaltelement 56 weiter an oder in die Vorgelegewelle V übertragen oder eingeleitet werden kann. Ebenso ist das erste Schaltelement 56 derart nicht betätigbar, insbesondere öffenbar oder geöffnet, dass keine Drehbewegung und/oder keine Kraft und/oder kein Drehmoment des ersten Zusatzantriebselements 50 an oder in die Vorgelegewelle V übertragen oder eingeleitet werden kann. Der leistungsverzweigte Achsantrieb 20 umfasst ausserdem einen dritten Radsatz 60. Das Leistungsverzweigungsgetriebe 52 ist über den oder mit dem dritten Radsatz 60 mit der Vorgelegewelle V verbunden, insbesondere antreibbar verbunden sein. Mit dem dritten Radsatz 60 kann eine Drehbewegung und/oder eine Kraft und/oder ein Drehmoment von der Vorgelegewelle V an oder in das Leistungsverzweigungsgetriebe 52 übertragen oder eingeleitet werden. Dadurch kann eine Drehbewegung und/oder eine Kraft und/oder ein Drehmoment vom ersten Zusatzantriebselement 50 über den zweiten Radsatz 58 an das erste Schaltelement 56 und vom ersten Schaltelement 56 an die Vorgelegewelle V und von der Vorgelegewelle V über den dritten oder mit dem dritten Radsatz 60 an das Leistungsverzweigungsgetriebe 52 übertragbar sein. Die Drehbewegung und/oder Kraft und/oder das Drehmoment kann dann beispielsweise vom Leistungsverzweigungsgetriebe 52, insbesondere über das erste Differential 30, auf die erste Fahrzeugachse 26 übertragbar sein. Im "Generator" Betriebsmodus, also im Fahr- oder Schubbetrieb und generatorischen Betrieb des ersten Zusatzantriebselements 50, wird dann, bei geschlossenem erstem Schaltelement 56, die vom Hauptantriebselement 22 in das Leistungsverzweigungsgetriebe 52 eingeleitet Drehbewegung und/oder Kraft und/oder das Drehmoment vom Leistungsverzweigungsgetriebe 52 über den dritten Radsatz 60 und die Vorgelegewelle V und das erste Schaltelement 56 und den zweiten Radsatz 58 in das erste Zusatzantriebselement 50 eingeleitet oder übertragen und mit dem ersten Zusatzantriebselement 50 elektrische Energie erzeugt. Die elektrisch erzeugte Energie kann dem Speicherelement 62 zugeführt werden. Im "Vorlauf" Betriebsmodus, also im Fahr- oder Schubbetrieb und motorischen Betrieb des ersten Zusatzantriebselements 50, wird eine zusätzliche Drehbewegung und/oder eine zusätzliche Kraft und/oder ein zusätzliches Drehmoment des ersten Zusatzantriebselement 50 vom ersten Zusatzantriebselement 50 über den zweiten Radsatz 58 und das geschlossen erste Schaltelement 56 an die Vorgelegewelle V und von der Vorgelegewelle V über den dritten Radsatz 60 an das Leistungsverzweigungsgetriebe 52 übertragen und vom Leistungsverzweigungsgetriebe 52 mit der Drehbewegung und/oder der Kraft und/oder dem Drehmoment des Hauptantriebselements 22 überlagert. Die resultierende Drehbewegung und/oder Kraft und/oder das resultierende Drehmoment werden vom Leistungsverzweigungsgetriebe 52 mit der zweiten Welle W2 an die erste Fahrzeugachse 26 übertragen. Vorteilhafterweise kann so das erste Zusatzantriebselement 50 auf das Leistungsverzweigungsgetriebe 52 einwirken, wodurch ein Vorlauf der ersten Fahrzeugachse 26 regelbar ist.

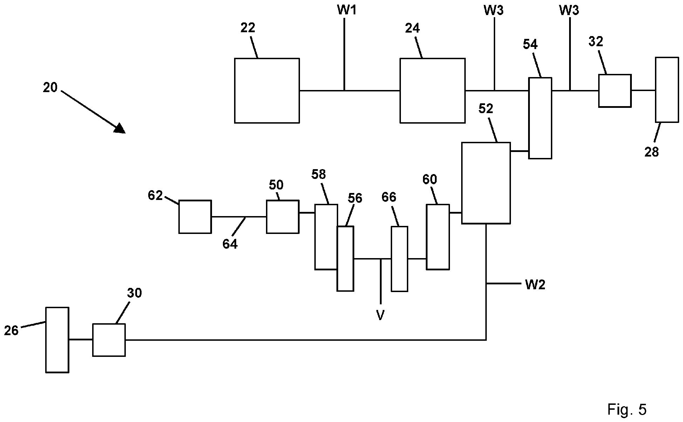

Figur 5 zeigt eine schematische Darstellung eines vierten Ausführungsbeispiels, nunmehr des erfindungsgemässen leistungsverzweigten Achsantriebs 20. Der in Figur 5 gezeigte Achsantrieb 20 entspricht im Wesentlichen dem in den Figuren 1 bis 4 gezeigten leistungsverzweigten Achsantrieb 20, sodass im Folgenden lediglich auf Details und/oder Unterschiede eingegangen wird. Das landwirtschaftliche Fahrzeug 10 kann den leistungsverzweigten Achsantrieb 20, wie in Figur 5 dargestellt, umfassen. Der leistungsverzweigte Achsantrieb 20 umfasst gemäß der Erfindung zusätzlich eine erste Bremse 66. Die erste Bremse 66 ist zwischen dem ersten Zusatzantriebselement 50 und dem Leistungsverzweigungsgetriebe 52 angeordnet. Die erste Bremse 66 ist mit der Vorgelegewelle V drehfest verbunden. Die Vorgelegewelle V ist mit der ersten Bremse 66 lösbar gegen Drehung haltbar. Dabei kann die Vorgelegewelle V mit der ersten Bremse 66 lösbar, beispielsweise mit einem Getriebegehäuse oder einem Rahmen, verbindbar sein. Dies ist beispielsweise dann von Vorteil, wenn insbesondere ein Fahrzustand im Allradbetrieb gewünscht ist, bei dem eine starre Verbindung zwischen der ersten und zweiten Fahrzeugachse 26, 28 erforderlich ist. In diesem Fall muss das erste Zusatzantriebselement 50 nicht permanent einen Gegenmoment aufbauen und somit elektrische Energie verbrauchen.

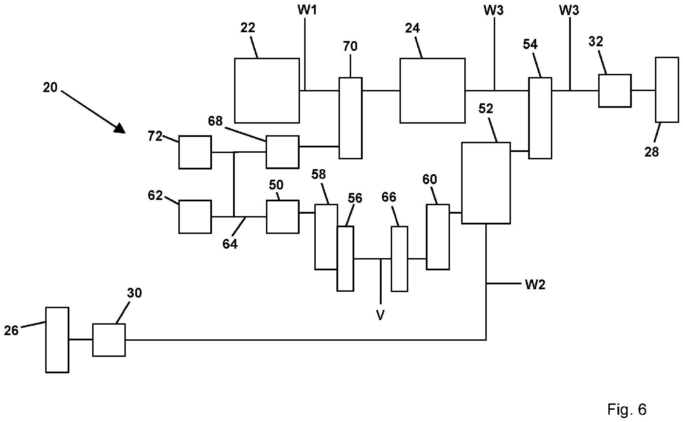

Figur 6 zeigt eine schematische Darstellung eines fünften Ausführungsbeispiels des erfindungsgemässen leistungsverzweigten Achsantriebs 20. Der in Figur 6 gezeigte Achsantrieb 20 entspricht im Wesentlichen dem in den Figuren 1 bis 5 gezeigten leistungsverzweigten Achsantrieb 20, sodass im Folgenden lediglich auf Details und/oder Unterschiede eingegangen wird. Das landwirtschaftliche Fahrzeug 10 kann den leistungsverzweigten Achsantrieb 20, wie in Figur 6 dargestellt, umfassen. Der leistungsverzweigte Achsantrieb 20 umfasst ein zweites Zusatzantriebselement 68. Das zweite Zusatzantriebselement 68 ist mit dem Hauptantriebselement 22 über oder mit der ersten Welle W1 verbunden, bevorzugt antreibbar verbunden. Das durch das Hauptantriebselement 22 erzeugbare Drehmoment und/oder die erzeugbare Kraft und/oder die erzeugbare Rotationsbewegung ist über eine Übersetzungsstufe 70, insbesondere einen vierten Radsatz, in oder an das zweite Zusatzantriebselement einleitbar oder übertragbar sein. Das zweite Zusatzantriebselement 68 ist über die Verbindungsleitung 64 mit dem Speicherelement 62 und dem ersten Zusatzantriebselement 50 leistungselektronisch verbunden. Das zweite Zusatzantriebselement 68 ist ausserdem über die Verbindungsleitung 64 mit einem Nebenabtrieb 72 leistungselektronisch verbunden. Der Nebenabtrieb 72 ist dabei, ebenso wie das Speicherelement 62, optional vorgesehen. Dies bedeutet, dass nicht zwingend ein Nebenabtrieb 72 vorgesehen sein muss. Darüber hinaus sind jedoch auch Ausführungen mit mehr als einem Nebenabtrieb 72 denkbar. Wie bereits erwähnt, kann erzeugte elektrische Energie beziehungsweise gespeicherte elektrische Energie dem Speicherelement 62 zugeführt oder entnommen oder den Verbrauchern, beispielsweise dem ersten Zusatzantriebselement 50, dem Nebenabtrieb 72 und/oder dem zweiten Zusatzelement 68 durch die Verbindungsleitung 64 zugeführt werden kann. Die mit dem Hauptantriebselement 22 erzeugte Drehbewegung beziehungsweise die erzeugte Kraft und/oder das erzeugte Drehmoment wird, insbesondere mit der Übersetzungsstufe 70, bevorzugt dem vierten Radsatz, und/oder der ersten Welle W1 in das zweite Zusatzantriebselement 68 und/oder das Hauptgetriebe 24 eingeleitet werden. Das zweite Zusatzantriebselement 68 kann in diesem Fall generatorisch betrieben werden, das heißt, dass die, insbesondere durch die Übersetzungsstufe 70, bevorzugt den vierten Radsatz, und/oder die erste Welle W1, eingeleitete Energie in Form der Drehbewegung und/oder der Kraft und/oder des Drehmoments in elektrische Energie umgewandelt wird. Diese elektrische Energie kann zum Betreiben des (elektrischen) Nebenabtriebs 72 verwendet werden und/oder elektrische Energie kann in dem optionalen Speicherelement 62 gespeichert werden und/oder das erste Zusatzantriebselement 50 kann motorisch betrieben werden, um den Vorlauf der ersten Fahrzeugachse 26 zu erhöhen. Soweit das zweite Zusatzantriebselement 68 generatorisch betrieben wird, wird elektrische Energie erzeugt. Diese kann zum Betreiben des Nebenabtriebs 72 verwendet und/oder in dem Speicherelement 62 gespeichert werden. Zum Laden des Speicherelements 62 können beispielsweise aber auch das erste Zusatzantriebselement 50 und/oder das zweite Zusatzantriebselement 68, insbesondere im Fahr- oder Schubbetrieb, generatorisch betrieben werden. Dazu kann mit dem Hauptantriebselement 22 eine Drehbewegung und/oder eine Kraft und/oder ein Drehmoment in das zweite Zusatzantriebselement 68 und über das Hauptgetriebe 24 in das Leistungsverzweigungsgetriebe 52 in das erste Zusatzantriebselement 50 eingeleitet oder übertragen werden. Das zweite Zusatzantriebselement 68 kann zusätzlich zu der durch das Hauptantriebselement 22 eingeleiteten Drehbewegung und/oder Kraft und/oder Drehmoment ebenfalls eine Drehbewegung und/oder Kraft und/oder Drehmoment einleiten, insbesondere über die Übersetzungsstufe, insbesondere den vierten Radsatz, in die erste Welle W1 einleiten. Dazu kann das zweite Zusatzantriebselement 68 motorisch betrieben werden. Somit kann beispielsweise kurzzeitig eine Erhöhung der Antriebsleistung erfolgen, soweit dies durch den jeweiligen Fahrzustand erforderlich ist.

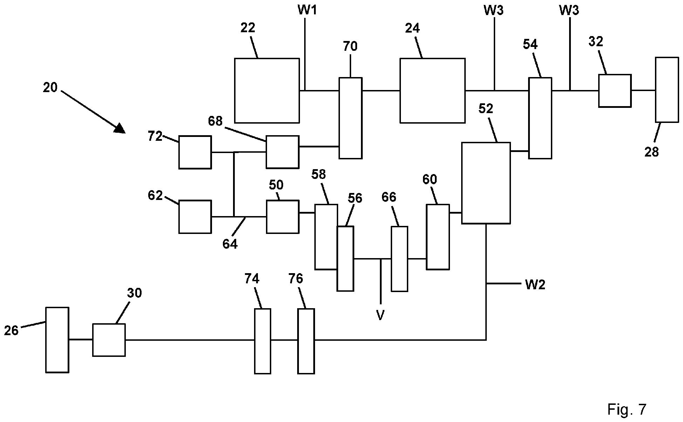

Figur 7 zeigt eine schematische Darstellung eines sechsten Ausführungsbeispiels des erfindungsgemässen leistungsverzweigten Achsantriebs 20. Der in Figur 7 gezeigte Achsantrieb 20 entspricht im Wesentlichen dem in den Figuren 1 bis 6 gezeigten leistungsverzweigten Achsantrieb 20, sodass im Folgenden lediglich auf Details und/oder Unterschiede eingegangen wird. Das landwirtschaftliche Fahrzeug 10 kann den leistungsverzweigten Achsantrieb 20, wie in Figur 7 dargestellt, umfassen. Auf oder an der zweiten Welle W2 sind ein zweites Schaltelement 74 und eine zweite Bremse 76 angeordnet. Das zweite Schaltelement 74 und die zweite Bremse 76 sind zwischen dem Leistungsverzweigungsgetriebe 52 und der ersten Fahrzeugachse 26 angeordnet sein. Das zweite Schaltelement 74 ist dabei zwischen der zweiten Bremse 76 und der ersten Fahrzeugachse 26 angeordnet. Das Leistungsverzweigungsgetriebe 52 ist über das zweite oder mit dem zweiten Schaltelement 74 mit der ersten Fahrzeugachse 26, und insbesondere dem ersten Differential 30, verbindbar, bevorzugt lösbar verbindbar, besonders bevorzugt lösbar drehfest und/oder lösbar antreibbar verbindbar. Die zweite Bremse 76 ist zwischen dem zweiten Schaltelement 74 und dem Leistungsverzweigungsgetriebe 52 angeordnet. Die zweite Bremse 76 ist auf der zweiten Welle W2 angeordnet. Die zweite Welle W2 ist mit der zweiten Bremse 76 lösbar, beispielsweise mit einem Getriebegehäuse oder einem Rahmen, lösbar gegen Drehung haltbar. Hierdurch kann die zweite Welle W2 in Bezug auf eine Drehbewegung gehalten oder gehemmt werden. Mit der zweiten Bremse 76 und dem zweiten Schaltelement 74 können mit dem leistungsverzweigten Achsantrieb die oben beschriebenen Betriebsmodi, der "Voll-Elektrisch" Betriebsmodus, der "Parkbremse" Betriebsmodus und der "Fahrzeugachsen-Bremse" Betriebsmodus realisiert werden. Das zweite Schaltelement 74 ist als eine zweite Kupplung ausgebildet. Das zweite Schaltelement 74 kann auf einer Seite drehfest mit der zweiten Welle W2 verbunden sein und auf einer anderen Seite mit einem anderen Teil der zweiten Welle W2 und somit mit dem Leistungsverzweigungsgetriebe 52 verbindbar sein. Die zweite Bremse 76 kann auf einer Seite mit der zweiten Welle W2 verbunden sein und auf einer anderen Seite beispielsweise mit dem Getriebegehäuse oder Rahmen verbunden sein. Hierdurch kann die zweite Welle W2 in Bezug auf eine Drehbewegung gehemmt und/oder gehalten werden.

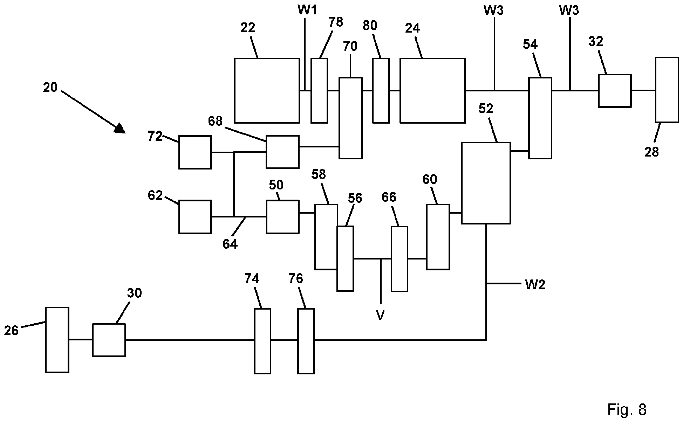

Figur 8 zeigt eine schematische Darstellung eines siebten Ausführungsbeispiels des erfindungsgemässen leistungsverzweigten Achsantriebs 20. Der in Figur 8 gezeigte Achsantrieb 20 entspricht im Wesentlichen dem in den Figuren 1 bis 7 gezeigten leistungsverzweigten Achsantrieb 20, sodass im Folgenden lediglich auf Details und/oder Unterschiede eingegangen wird. Das landwirtschaftliche Fahrzeug 10 kann den leistungsverzweigten Achsantrieb 20, wie in Figur 8 dargestellt, umfassen. Zwischen dem Hauptantriebselement 22 und dem zweiten Zusatzantriebselement 68 und/oder dem Hauptantriebselement 22 und dem Hauptgetriebe 24 ist ein drittes Schaltelement 78 angeordnet. Ebenso ist zwischen dem Hauptgetriebe 24 und dem Hauptantriebselement 22 und/oder dem Hauptgetriebe 24 und dem zweiten Zusatzantriebselement 68 ein viertes Schaltelement 80 angeordnet sein. Bei geöffnetem drittem Schaltelement 78 ist das Hauptantriebselement 22 von dem leistungsverzweigten Achsantrieb 20 entkoppelt. Es kann also vom Hauptantriebselement 22 keine Drehbewegung und/oder Kraft und/oder kein Drehmoment in oder an das zweite Zusatzantriebselement 68 und/oder das Hauptgetriebe 24 eingeleitet oder übertragen werden. Ebenso kann auch umgekehrt keine Drehbewegung und/oder Kraft und/oder kein Drehmoment in oder an das Hauptantriebselement 22 eingeleitet oder übertragen werden. In diesem Fall wäre demnach lediglich ein rein elektrischer Fahrzustand durch das motorische Betreiben des ersten Zusatzantriebselements 50 und/oder des zweiten Zusatzantriebselements 68 realisierbar. Bei geschlossenem drittem Schaltelement 78 ist das Hauptantriebselement 22 mit dem leistungsverzweigten Achsantrieb 20 verbunden. Es kann also vom Hauptantriebselement 22 eine Drehbewegung und/oder eine Kraft und/oder ein Drehmoment in oder an das zweite Zusatzantriebselement 68 und/oder das Hauptgetriebe 24 eingeleitet oder übertragen werden. Ebenso kann auch umgekehrt eine Drehbewegung und/oder eine Kraft und/oder ein Drehmoment in oder an das Hauptantriebselement 22 eingeleitet oder übertragen werden. Bei geöffnetem viertem Schaltelement 80 ist also das Hauptgetriebe 24 vom Hauptantriebselement 22 und/oder dem zweite Zusatzantriebselement 68 entkoppelt. Dies bedeutet, dass ein mechanisch eingeleiteter Vortrieb über das Hauptgetriebe 24 nicht darstellbar ist. Es kann also vom Hauptgetriebe 24 keine Drehbewegung und/oder Kraft und/oder kein Drehmoment in oder an den leistungsverzweigten Achsantrieb eingeleitet oder übertragen werden. Darüber hinaus kann bei ausgeschaltetem Hauptantriebselement 22 und geöffnetem vierten Schaltelement 80 und geschlossenem dritten Schaltelement 78 das Hauptantriebselement 22 durch motorischen Betrieb des zweiten Zusatzantriebselements 68 gestartet werden. Bei geschlossenem viertem Schaltelement 80 ist also das Hauptgetriebe 24 mit dem Hauptantriebselement 22 und/oder dem zweite Zusatzantriebselement 68 verbunden, insbesondere antreibbar verbunden. Es kann also vom Hauptgetriebe 24 eine Drehbewegung und/oder eine Kraft und/oder ein Drehmoment in oder an den leistungsverzweigten Achsantrieb eingeleitet oder übertragen werden.

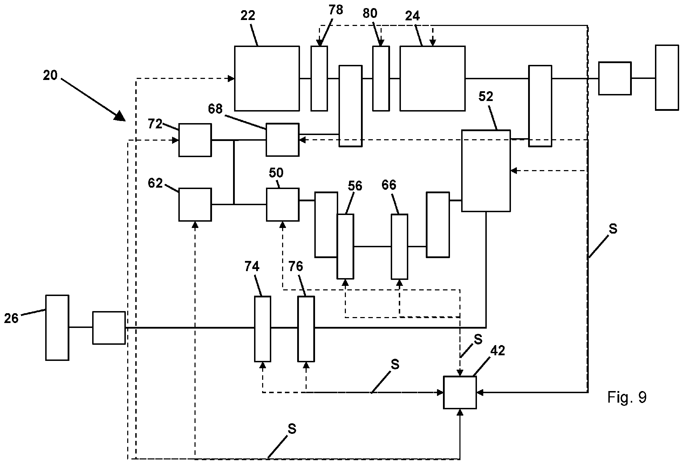

Figur 9 zeigt eine schematische Darstellung eines achten Ausführungsbeispiels des erfindungsgemässen leistungsverzweigten Achsantriebs 20. Der in Figur 9 gezeigte Achsantrieb 20 entspricht im Wesentlichen dem in den Figuren 1 bis 8 gezeigten leistungsverzweigten Achsantrieb 20, sodass im Folgenden lediglich auf Details und/oder Unterschiede eingegangen wird. Das landwirtschaftliche Fahrzeug 10 kann den leistungsverzweigten Achsantrieb 20, wie in Figur 9 dargestellt, umfassen. Dem leistungsverzweigten Achsantrieb 20 ist zumindest eine Steuerungsvorrichtung 42 zugeordnet, insbesondere kann der leistungsverzweigte Achsantrieb 20 die Steuerungsvorrichtung 42 umfassen. Die Steuerungsvorrichtung 42 ist über mehrere Steuerleitungen S, bevorzugt über bidirektionale Steuerleitungen, mit dem ersten und/oder zweiten Zusatzantriebselement 50, 68 und/oder dem Nebenabtrieb 72 und/oder dem Speicherelement 62 und/oder dem ersten und/oder zweiten und/oder dritten und/oder vierten Schaltelement 56, 74, 78, 80 und/oder dem Hauptantriebselement 22 und/oder dem Hauptgetriebe 24 und/oder dem Leistungsverzweigungsgetriebe 52 und/oder einer ersten und/oder zweiten Bremse 66, 76 zur Steuerung und/oder Regelung und/oder deren Ansteuerung verbunden, und ist insbesondere mit diesen signalverbunden und/oder signalübertragend und/oder datenleitend verbunden. Die Steuerungsvorrichtung 42 ist derart ausgebildet, dass der leistungsverzweigte Achsantrieb 20, insbesondere die oben genannten Komponenten des leistungsverzweigten Achsantriebs 20, in Abhängigkeit von einem Betriebsmodus des leistungsverzweigten Achsantrieb 20 und/oder Fahrzeugs 10 ansteuerbar sind.

Insbesondere die oben genannten Betriebsmodi "Generator" und/oder "Vorlauf" und/oder "Voll-Elektrisch" und/oder "Parkbremse" und/oder "Fahrzeugachsen-Bremse" können mit der Steuerungsvorrichtung 42 ansteuerbar sein.

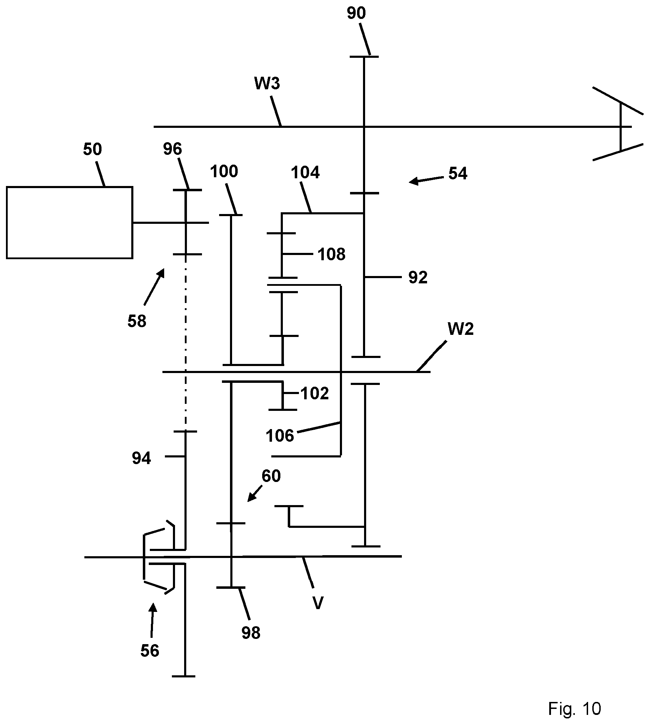

Figur 10 zeigt eine detaillierte schematische Darstellung eines neunten Ausführungsbeispiels eines nicht erfindungsgemässen leistungsverzweigten Achsantriebs 20, insbesondere des Leistungsverzweigungsgetriebes 52 und des ersten Zusatzantriebselement 50. Der in Figur 10 gezeigte leistungsverzweigte Achsantrieb 20 entspricht im Wesentlichen dem in den Figuren 1 bis 9 gezeigten leistungsverzweigten Achsantrieb 20, sodass im Folgenden lediglich auf Details und/oder Unterschiede eingegangen wird. Das landwirtschaftliche Fahrzeug 10 kann den leistungsverzweigten Achsantrieb 20, wie in Figur 10 dargestellt, umfassen. Der erste Radsatz 54 umfasst ein erstes Zahnradpaar, insbesondere ein erstes und ein zweites Festrad 90, 92. Das erste Festrad 90 ist mit der dritten Welle W3 und das zweite Festrad 92 mit dem Leistungsverzweigungsgetriebe 52 verbunden, bevorzugt drehfest verbunden. Das erste Festrad 90 kämmt mit dem zweiten Festrad 92, befindet sich also insbesondere in ständigem Kämmeingriff mit diesem. Der zweite Radsatz 58 umfasst ein zweites Zahnradpaar, insbesondere ein erstes Schaltrad 94 und ein drittes Festrad 96. Das dritte Festrad 96 ist mit dem ersten Zusatzantriebselement 50, insbesondere einer Abtriebswelle des ersten Zusatzantriebselements 50, verbunden, bevorzugt antreibbar verbunden, besonders bevorzugt drehfest und/oder antreibbar verbunden sein. Das erste Schaltrad 94 ist drehbar auf der Vorgelegewelle V gelagert, insbesondere frei drehbar und/oder axial verschiebbar auf der Vorgelegewelle V gelagert sein. Das erste Schaltrad 94 ist mit einer Seite des ersten Schaltelements 56 verbunden, bevorzugt drehfest und/oder antreibbar verbunden sein. Das erste Schaltrad 94 kämmt mit dem dritten Festrad 96, befindet sich also insbesondere in ständigem Kämmeingriff mit diesem. Das erste Schaltelement 56 ist also über das erste oder mit dem ersten Schaltrad 94 und über das dritte oder mit dem dritten Festrad 96 mit dem ersten Zusatzantriebselement 50 verbunden, bevorzugt antreibbar verbunden. Die Vorgelegewelle V wiederum ist mit dem ersten oder über das erste Schaltelement 56 und das erste Schaltrad 94 mit dem dritten Festrad 96 verbunden, bevorzugt antreibbar verbunden, besonders bevorzugt lösbar antreibbar verbunden. Der dritte Radsatz 60 umfasst ein drittes Zahnradpaar, insbesondere ein viertes und ein fünftes Festrad 98, 100. Das vierte Festrad 98 ist mit der Vorgelegewelle V und das fünfte Festrad 100 mit dem Leistungsverzweigungsgetriebe 52, insbesondere einem Sonnenrad 102 des Leistungsverzweigungsgetriebe 52, verbunden, bevorzugt drehfest und/oder antreibbar verbunden. Das vierte Festrad 98 kämmt mit dem fünften Festrad 100, befindet sich also insbesondere in ständigem Kämmeingriff mit diesem.

Das Leistungsverzweigungsgetriebe 52 ist als Planetengetriebe ausgeführt. Ein Hohlrad 104 des Leistungsverzweigungsgetriebes 52 ist über den oder mit dem ersten Radsatz 54 mit der dritten Welle W3 verbunden, insbesondere antreibbar verbunden. Das Hohlrad 104 ist mit dem zweiten Festrad 92 verbunden, bevorzugt drehfest und/oder antreibbar verbunden sein. Dadurch ist eine Kraft und/oder eine Drehbewegung und/oder ein Drehmoment vom Hauptantriebselement 22 über das Hauptgetriebe 24 an die dritte Welle W3 und weiter über den ersten Radsatz 54 an das Hohlrad 104 und somit insbesondere das Leistungsverzweigungsgetriebe 52 bzw. das Planetengetriebe übertragbar sein. Die erste Fahrzeugachse 26 ist über oder mit der zweiten Welle W2 mit einem Planetenträger 106 beziehungsweise einem Steg des Leistungsverzweigungsgetriebes 52 verbunden, insbesondere antreibbar verbunden. Der Planetenträger 106 ist mit der zweiten Welle W2 verbunden, bevorzugt drehfest und/oder antreibbar verbunden. Dadurch ist eine Kraft und/oder eine Drehbewegung und/oder ein Drehmoment vom Leistungsverzweigungsgetriebes 52 über den Planetenträger 106 auf die zweite Welle W2 und weiter, insbesondere über das erste Differential 30, an die erste Fahrzeugachse 26 übertragbar. An dem Planetenträger 106 ist ein Planetensatz, insbesondere eines oder mehrere Planetenräder 108, drehbar gelagert, die jeweils mit Sonnenrad 102 und Hohlrad 104 kämmen, sich also insbesondere in ständigem Kämmeingriff mit diesen befinden. Der Planetensatz kann insbesondere einen Satz von Planetenrädern 108 aufweisen. Der Planetensatz kann drei Planetenräder 108 umfassen. Darüber hinaus ist das Sonnenrad 102 des Leistungsverzweigungsgetriebes 52 über das fünfte Festrad 100 und das vierte Festrad 98, und insbesondere weiter über die Vorgelegewelle V und das Schaltelement und den zweiten Radsatz, mit dem ersten Zusatzantriebselement verbunden, insbesondere antreibbar verbunden. Dadurch ist eine Kraft und/oder ein Drehmoment vom ersten Zusatzantriebselement über den zweiten Radsatz und das Schaltelement an die Vorgelegewelle und von der Vorgelegewelle über das vierte Festrad 98 und das fünfte Festrad 100 an das Sonnenrad 102 des Leistungsverzweigungsgetriebes 52 übertragbar.

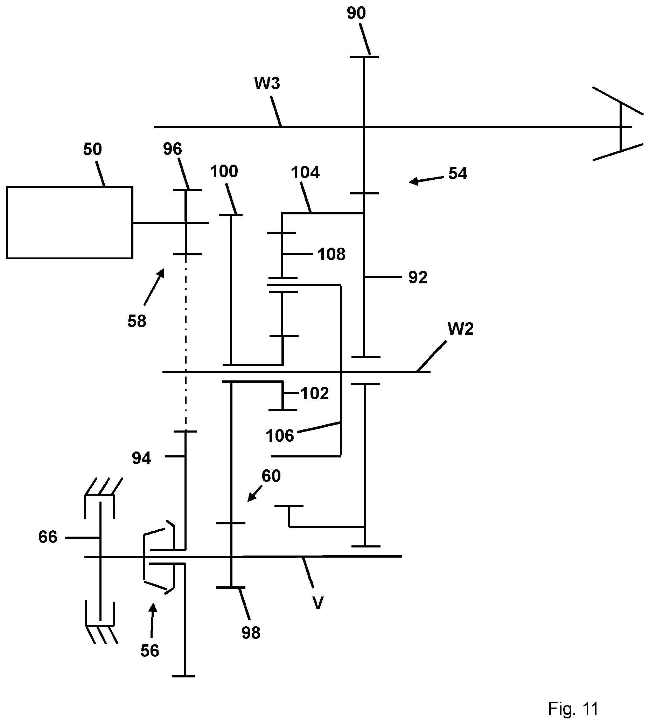

Figur 11 zeigt eine detaillierte schematische Darstellung eines zehnten Ausführungsbeispiels des erfindungsgemässen leistungsverzweigten Achsantriebs 20, insbesondere des Leistungsverzweigungsgetriebes 52 und des ersten Zusatzantriebselement 50. Der in Figur 11 gezeigte leistungsverzweigte Achsantrieb 20 entspricht im Wesentlichen dem in den Figuren 1 bis 10 gezeigten leistungsverzweigten Achsantrieb 20, sodass im Folgenden lediglich auf Details und/oder Unterschiede eingegangen wird. Das landwirtschaftliche Fahrzeug 10 kann den leistungsverzweigten Achsantrieb 20, wie in Figur 11 dargestellt, umfassen. Die erste Bremse 66 ist auf der Vorgelegewelle V angeordnet. Die erste Bremse 66 ist mit der Vorgelegewelle V verbunden, bevorzugt mit der Vorgelegewelle V antreibbar verbunden, besonders bevorzugt mit der Vorgelegewelle V drehfest und/oder antreibbar verbunden. Wenn die erste Bremse 66 betätigt, also insbesondere geschlossen ist, arbeitet das Leistungsverzweigungsgetriebe 52 mit einem festen Verhältnis, also vollständig mechanisch. Das Leistungsverzweigungsgetriebe 52 kann dann das Bremsmoment von der ersten Fahrzeugachse 26 auf die Fahrzeugbremse oder Hinterachsbremse (an der zweiten Fahrzeugachse 28) übertragen. Ebenso kann mit der ersten Bremse 66 mehr mechanische Kraft auf die erste Fahrzeugachse 26 übertragen werden.

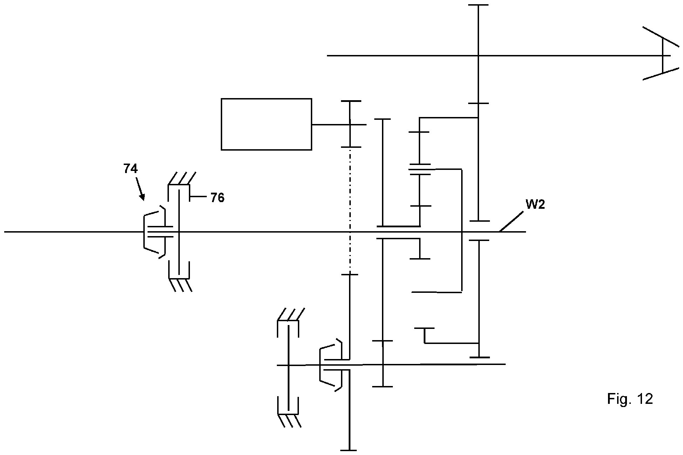

Figur 12 zeigt eine detaillierte schematische Darstellung eines elften Ausführungsbeispiels des erfindungsgemässen leistungsverzweigten Achsantriebs 20. Der in Figur 12 gezeigte Achsantrieb 20 entspricht im Wesentlichen dem in den Figuren 1 bis 11 gezeigten leistungsverzweigten Achsantrieb 20, sodass im Folgenden lediglich auf Details und/oder Unterschiede eingegangen wird. Das landwirtschaftliche Fahrzeug 10 kann den leistungsverzweigten Achsantrieb 20, wie in Figur 12 dargestellt, umfassen. Das zweite Schaltelement 74 und die zweite Bremse 76 sind auf der zweiten Welle W2 zwischen Leistungsverzweigungsgetriebe 52 und erster Fahrzeugachse 26 angeordnet.

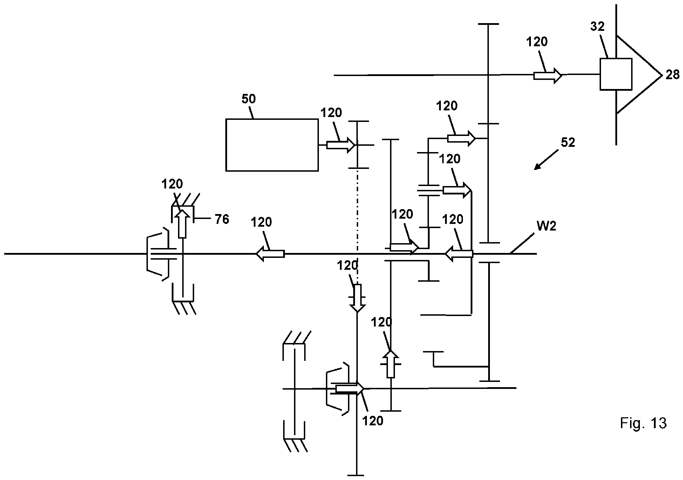

Die Figuren 13 bis 15 zeigen schematische Darstellungen des Leistungsflusses im "Voll-Elektrisch" Betriebsmodus, "Parkbremse" Betriebsmodus und "Fahrzeugachsen-Bremse" Betriebsmodus im erfindungsgemässen leistungsverzweigten Achsantriebs 20. Der in den Figur 13 bis 15 gezeigte leistungsverzweigte Achsantrieb 20 entspricht dabei im Wesentlichen dem in den Figuren 1 bis 12 gezeigten leistungsverzweigten Achsantrieb 20, sodass im Folgenden lediglich auf Details und/oder Unterschiede eingegangen wird. Die Pfeile 120 zeigen dabei die Richtung des Leistungsflusses, also die Richtung der Übertragung einer Drehbewegung und/oder einer Kraft und/oder eines Drehmoments. Die Grösse der Pfeile 120 zeigt schematisch die Grösse der übertragenen Drehbewegung und/oder Kraft und/oder des übertragenen Drehmoments an.

Figur 13 zeigt den Leistungsfluss des "Voll-Elektrisch" Betriebsmodus. Im "Voll-Elektrisch" Betriebsmodus wird ein Leistungsfluss, also eine Drehbewegung und/oder eine Kraft und/oder ein Drehmoment, vom ersten Zusatzantriebselement 50 über das Leistungsverzweigungsgetriebe 52 an die zweite Fahrzeugachse 28 übertragen. An oder von der geschlossenen zweiten Bremse 76 kann eine Drehbewegung und/oder eine Kraft und/oder ein Drehmoment, welche vom Leistungsverzweigungsgetriebe 52 an die zweite Welle W2, also insbesondere in Richtung der ersten Fahrzeugachse 26, übertragen wird, gehalten und/oder gehemmt und/oder abgestützt werden. Im Speziellen kann die zweite Welle W2 mit der zweiten Bremse 76 in Bezug auf eine Drehbewegung der zweiten Welle W2 gehalten oder gehemmt werden.

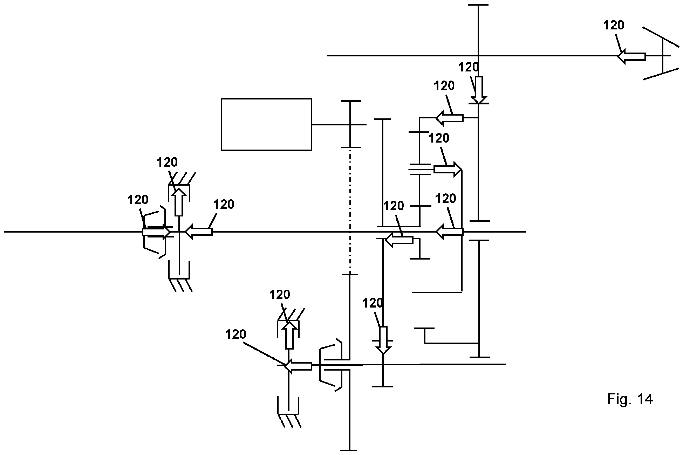

Figur 14 zeigt den Leistungsfluss des "Parkbremse" Betriebsmodus. Im "Parkbremse" Betriebsmodus wird ein Leistungsfluss, also eine Drehbewegung und/oder eine Kraft und/oder ein Drehmoment, von der ersten und/oder zweiten Fahrzeugachse 26, 28 an den leistungsverzweigten Achsantrieb 20 übertragen und abgestützt werden. Dadurch wird das Fahrzeug in seiner Position gehalten.

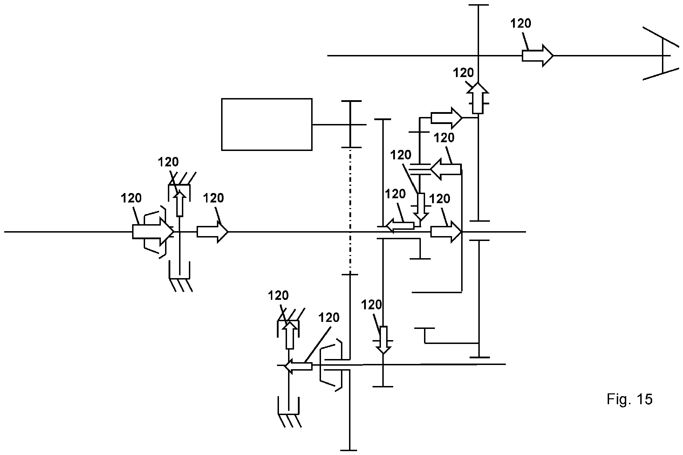

Figur 15 zeigt den Leistungsfluss des "Fahrzeugachsen-Bremse" Betriebsmodus. Im "Fahrzeugachsen-Bremse" Betriebsmodus wird ein Leistungsfluss, also eine Drehbewegung und/oder eine Kraft und/oder ein Drehmoment, von der ersten und/oder zweiten Fahrzeugachse 26, 28 an den leistungsverzweigten Achsantrieb 20 übertragen und zumindest teilweise gehemmt und/oder gehalten und zumindest teilweise an die Hinterachsbremse übertragen. Dadurch wird das Fahrzeug, insbesondere im Fahr- oder Schubbetrieb, gebremst.

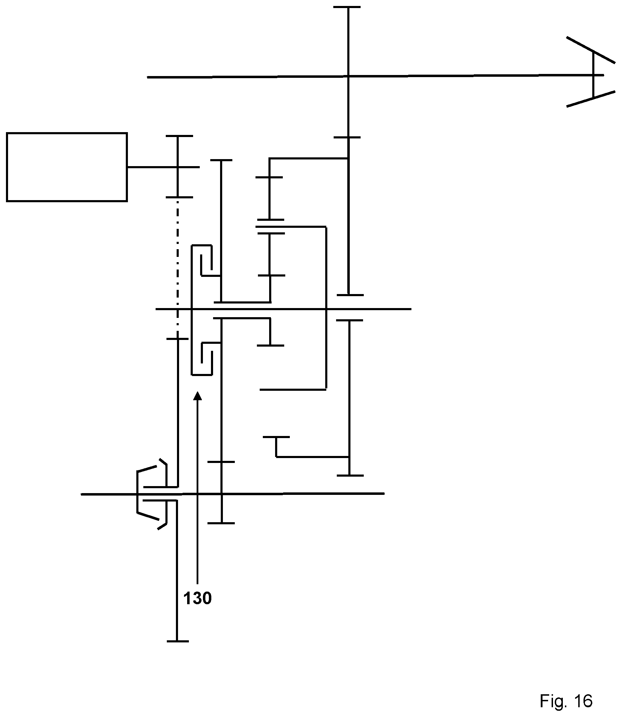

Figur 16 zeigt eine detaillierte schematische Darstellung eines zwölften Ausführungsbeispiels eines nicht erfindungsgemässen leistungsverzweigten Achsantriebs 20. Der in Figur 16 gezeigte Achsantrieb 20 entspricht im Wesentlichen dem in den Figuren 1 bis 15 gezeigten leistungsverzweigten Achsantrieb 20, sodass im Folgenden lediglich auf Details und/oder Unterschiede eingegangen wird. Das landwirtschaftliche Fahrzeug 10 kann den leistungsverzweigten Achsantrieb 20, wie in Figur 16 dargestellt, umfassen.

Das nicht erfindungsgemäße Leistungsverzweigungsgetriebe 52 umfasst anstatt der ersten Bremse 66 ein fünftes Schaltelement 130. Das fünfte Schaltelement 130 ist als fünfte Kupplung ausgebildet. Das fünfte Festrad 100 und/oder das Sonnenrad 102 sind über das geschlossene fünfte Schaltelement 130 mit der zweiten Welle W2 drehfest verbunden. Die erste und zweite Fahrzeugachse 26, 28 werden somit beide mechanisch durch das Hauptantriebselement 22 angetrieben. Im Speziellen ist die relative Geschwindigkeit des Sonnenrads 102 und der zweiten Welle W2 0 (Null) Umdrehungen pro Minute. Das führt dazu, dass Hohlrad 104 sich mit der gleichen Geschwindigkeit dreht wie das Sonnenrad 102 und die zweite Welle W2. Bei geöffnetem fünftem Schaltelement kann eine Drehzahl und/oder eine Kraft und/oder ein Drehmoment des ersten Zusatzantriebselements 50 vom fünften Festrad 100 und/oder das Sonnenrad 102 in das Leistungsverzweigungsgetriebe 52 übertragbar oder einleitbar sein.

**Patentansprüche**

1. Leistungsverzweigter Achsantrieb für ein landwirtschaftliches Fahrzeug, umfassend ein erstes Zusatzantriebselement (50), eine erste Fahrzeugachse (26), eine zweite Fahrzeugachse (28) und ein Hauptantriebselement (22) zur Bereitstellung eines Drehmoments, welches mit einer ersten Welle (W1) auf ein Hauptgetriebe (24) übertragbar ist, wobei das Hauptgetriebe (24) mit der zweiten Fahrzeugachse (28) verbunden ist, und mit dem Drehmoment des Hauptantriebselements (22) wenigstens die zweite Fahrzeugachse (28) über das Hauptgetriebe (24) antreibbar ist, und der leistungsverzweigte Achsantrieb (20) ein Leistungsverzweigungsgetriebe (52) aufweist, wobei das Leistungsverzweigungsgetriebe (52) über einen ersten Radsatz (54) mit der zweiten Fahrzeugachse (28) und dem Hauptgetriebe (24) verbunden ist und über eine zweite Welle mit der ersten Fahrzeugachse (26) verbunden ist, wobei das erste Zusatzantriebselement (50) über ein erstes Schaltelement (56) mit dem Leistungsverzweigungsgetriebe (52) verbindbar ist, **dadurch gekennzeichnet, dass** zwischen dem ersten Zusatzantriebselement (50) und dem Leistungsverzweigungsgetriebe (52) eine erste Bremse (66) angeordnet ist.

2. Leistungsverzweigter Achsantrieb nach Anspruch 1, **dadurch gekennzeichnet, dass** der leistungsverzweigte Achsantrieb (20) eine Vorgelegewelle (V) umfasst, wobei das erste Zusatzantriebselement (50) über das erste Schaltelement (56) mit der Vorgelegewelle (V) verbindbar ist.

3. Leistungsverzweigter Achsantrieb nach Anspruch 1 oder 2, **dadurch gekennzeichnet, dass** der leistungsverzweigte Achsantrieb (20) einen zweiten und dritten Radsatz (58, 60) umfasst, wobei das erste Schaltelement (56) über den zweiten Radsatz (58) mit dem ersten Zusatzantriebselement (50) verbindbar ist, und die Vorgelegewelle (V) über den dritten Radsatz (60) mit dem Leistungsverzweigungsgetriebe (52) verbunden ist.

4. Leistungsverzweigter Achsantrieb nach mindestens einem der vorangehenden Ansprüche, **dadurch gekennzeichnet, dass** das Leistungsverzweigungsgetriebe (52) als Planetengetriebe ausgebildet ist.

5. Leistungsverzweigter Achsantrieb nach mindestens einem der vorangehenden Ansprüche, **dadurch gekennzeichnet, dass** der leistungsverzweigte Achsantrieb (20) ein zweites Zusatzantriebselement (68) umfasst.

6. Leistungsverzweigter Achsantrieb nach mindestens einem der vorangehenden, **dadurch gekennzeichnet, dass** auf der zweiten Welle (W2) ein zweites Schaltelement (74) und/oder eine zweite Bremse (76) angeordnet ist.

7. Leistungsverzweigter Achsantrieb nach mindestens einem der vorangehenden Ansprüche, **dadurch gekennzeichnet, dass** dem leistungsverzweigten Achsantrieb (20) zumindest eine Steuerungsvorrichtung (42) zugeordnet ist.

8. Leistungsverzweigter Achsantrieb nach Anspruch 7, **dadurch gekennzeichnet, dass** die Steuerungsvorrichtung (42) zur Ansteuerung des leistungsverzweigten Achsantriebs (20) in Abhängigkeit von einem Betriebsmodus des leistungsverzweigten Achsantriebs (20) eingerichtet ist.

9. Leistungsverzweigter Achsantrieb nach Anspruch 6, **dadurch gekennzeichnet, dass** zwischen dem Hauptantriebselement (22) und dem zweiten Zusatzantriebselement (68) und/oder dem Hauptantriebselement (22) und dem Hauptgetriebe (24) ein drittes Schaltelement (78) angeordnet ist, und/oder zwischen dem Hauptgetriebe (24) und dem Hauptantriebselement (22) und/oder dem zweiten Zusatzantriebselement (68) ein viertes Schaltelement (80) angeordnet ist.

10. Landwirtschaftliches Fahrzeug umfassend einen leistungsverzweigten Achsantrieb (20) nach einem der Ansprüche 1 bis 9.

11. Landwirtschaftliches Fahrzeug nach Anspruch 10, **dadurch gekennzeichnet, dass** der leistungsverzweigte Achsantrieb (20) zum Antreiben des Fahrzeugs (10) ausgebildet ist.

12. Landwirtschaftliches Fahrzeug nach mindestens einem der Ansprüche 10 oder 11, **dadurch gekennzeichnet, dass** eine Steuerungsvorrichtung (42) zur Bestimmung von unterschiedlichen Betriebsmodi des landwirtschaftlichen Fahrzeugs (10) eingerichtet ist.

**Claims**

1. Power-split axle drive for an agricultural vehicle, comprising a first additional drive element (50), a first vehicle axle (26), a second vehicle axle (28), and a primary drive element (22) for providing a torque which by way of a first shaft (W1) is able to be transmitted to a primary transmission (24), the primary transmission (24) being connected to the second vehicle axle (28), and at least the second vehicle axle (28) by way of the primary transmission (24) being able to be driven by the torque of the primary drive element (22), and the power-split axle drive (20) having a power-splitting transmission (52), the power-splitting transmission (52) by way of a first gear set (54) being connected to the second vehicle axle (28) and to the primary transmission (24), and by way of a second shaft being connected to the first vehicle axle (26), the first additional drive element (50) being connectable to the power-splitting transmission (52) by way of a first switching element (56), **characterized in that** a first brake (66) is disposed between the first additional drive element (50) and the power-splitting transmission (52).

2. Power-split axle drive according to Claim 1, **characterized in that** the power-split axle drive (20) comprises a layshaft (V), the first additional drive element (50) being connectable to the layshaft (V) by way of the first switching element (56).

3. Power-split axle drive according to Claim 1 or 2, **characterized in that** the power-split axle drive (20) comprises a second and a third gear set (58, 60), the first switching element (56) by way of the second gear set (58) being connectable to the first additional drive element (50), and the layshaft (V) being connected to the power-split transmission (52) by way of the third gear set (60).

4. Power-split axle drive according to at least one of the preceding claims, **characterized in that** the power-splitting transmission (52) is configured as a planetary transmission.

5. Power-split axle drive according to at least one of the preceding claims, **characterized in that** the power-split axle drive (20) comprises a second additional drive element (68).

6. Power-split axle drive according to at least one of the preceding, **characterized in that** a second switching element (74) and/or a second brake (76) are/is disposed on the second shaft (W2).

7. Power-split axle drive according to at least one of the preceding claims, **characterized in that** the power-split axle drive (20) is assigned at least one control device (42).

8. Power-split axle drive according to Claim 7, **characterized in that** the control device (42) is specified for actuating the power-split axle drive (20) as a function of an operating mode of the power-split axle drive (20).

9. Power-split axle drive according to Claim 6, **characterized in that** a third switching element (78) is disposed between the primary drive element (22) and the second additional drive element (68) and/or the primary drive element (22) and the primary transmission (24), and/or a fourth switching element (80) is disposed between the primary transmission (24) and the primary drive element (22) and/or the second additional drive element (68).

10. Agricultural vehicle comprising a power-split axle drive (20) according to one of Claims 1 to 9.

11. Agricultural vehicle according to Claim 10, **characterized in that** the power-split axle drive (20) is configured for driving the vehicle (10).

12. Agricultural vehicle according to at least one of Claims 10 or 11, **characterized in that** a control device (42) is specified for determining different operating modes of the agricultural vehicle (10).


**Revendications**

1. Entraînement d'essieu à dérivation de puissance pour un véhicule agricole, comprenant un premier élément d'entraînement supplémentaire (50), un premier essieu de véhicule (26), un deuxième essieu de véhicule (28) et un élément d'entraînement principal (22) destiné à fournir un couple, lequel peut être transmis à une transmission principale (24) avec un premier arbre (W1), la transmission principale (24) étant reliée au deuxième essieu de véhicule (28), et le couple de l'élément d'entraînement principal (22) pouvant entraîner au moins le deuxième essieu (28) du véhicule par le biais de la transmission principale (24), et l'entraînement d'essieu à dérivation de puissance (20) possédant une transmission à dérivation de puissance (52), la transmission à dérivation de puissance (52) étant reliée au deuxième essieu de véhicule (28) et à la transmission principale (24) par le biais d'un premier jeu de roues (54) et étant reliée au premier essieu de véhicule (26) par le biais d'un deuxième arbre, le premier élément d'entraînement auxiliaire (50) pouvant être relié à la transmission à dérivation de puissance (52) par le biais d'un premier élément de commutation (56), **caractérisé en ce qu'**un premier frein (66) est disposé entre le premier élément d'entraînement auxiliaire (50) et la transmission à dérivation de puissance (52).

2. Entraînement d'essieu à dérivation de puissance selon la revendication 1, **caractérisé en ce que** l'entraînement d'essieu à dérivation de puissance (20) comprend un arbre intermédiaire (V), le premier élément d'entraînement supplémentaire (50) pouvant être relié à l'arbre intermédiaire (V) par le biais du premier élément de commutation (56).

3. Entraînement d'essieu à dérivation de puissance selon la revendication 1 ou 2, **caractérisé en ce que** l'entraînement d'essieu à dérivation de puissance (20) comprend un deuxième et un troisième jeu de roues (58, 60), le premier élément de commutation (56) pouvant être relié au premier élément d'entraînement supplémentaire (50) par le biais du deuxième jeu de roues (58) et l'arbre intermédiaire (V) étant relié à la transmission à dérivation de puissance (52) par le biais du troisième jeu de roues (60).

4. Entraînement d'essieu à dérivation de puissance selon au moins l'une des revendications précédentes, **caractérisé en ce que** la transmission à dérivation de puissance (52) est réalisée sous la forme d'un engrenage planétaire.

5. Entraînement d'essieu à dérivation de puissance selon au moins l'une des revendications précédentes, **caractérisé en ce que** l'entraînement d'essieu à dérivation de puissance (20) comprend un deuxième élément d'entraînement supplémentaire (68).

6. Entraînement d'essieu à dérivation de puissance selon au moins l'une des revendications précédentes, **caractérisé en ce qu'**un deuxième élément de commutation (74) et/ou un deuxième frein (76) est disposé sur le deuxième arbre (W2).

7. Entraînement d'essieu à dérivation de puissance selon au moins l'une des revendications précédentes, **caractérisé en ce qu'**au moins un dispositif de commande (42) est associé à l'entraînement d'essieu à dérivation de puissance (20).

8. Entraînement d'essieu à dérivation de puissance selon la revendication 7, **caractérisé en ce que** le dispositif de commande (42) est conçu pour commander l'entraînement d'essieu à dérivation de puissance (20) en fonction d'un mode de fonctionnement de l'entraînement d'essieu à dérivation de puissance (20).

9. Entraînement d'essieu à dérivation de puissance selon la revendication 6, **caractérisé en ce qu'**un troisième élément de commutation (78) est disposé entre l'élément d'entraînement principal (22) et le deuxième élément d'entraînement supplémentaire (68) et/ou l'élément d'entraînement principal (22) et la transmission principale (24) et/ou un quatrième élément de commutation (80) est disposé entre la transmission principale (24) et l'élément d'entraînement principal (22) et/ou le deuxième élément d'entraînement supplémentaire (68).

10. Véhicule agricole comprenant un entraînement d'essieu à dérivation de puissance (20) selon l'une des revendications 1 à 9.

11. Véhicule agricole selon la revendication 10, **caractérisé en ce que** l'entraînement d'essieu à dérivation de puissance (20) est configuré pour entraîner le véhicule (10).

12. Véhicule agricole selon au moins l'une des revendications 10 ou 11, **caractérisé en ce qu'**un dispositif de commande (42) est conçu pour déterminer des modes de fonctionnement différents du véhicule agricole (10).

FIG. 1

Fig. 2

Fig. 3

Fig. 4

Fig. 5

Fig. 6

Fig. 7

Fig. 8

Fig. 9

Fig. 10

Fig. 11

Fig. 12

Fig. 13

Fig. 14

Fig. 15

Fig. 16

130

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102007021732 A1
- EP 3626502 A1
- DE 102013224383 A1
- DE 102017218858 A1
- DE 102014009866 A1
- US 2012077633 A
- JP 2007045177 A
- EP 3925809 A1